# EUROPEAN PATENT APPLICATION

(11) **EP 2 177 997 A1**
(43) Date of publication of application: **21.04.2010**
(21) Application number: 08776940.2
(22) Date of filing: 28.05.2008
(51) Int. Cl.: G06F 13/00, G06F 21/20, H04L 9/32, H04L 12/56

(54) **COMMUNICATION METHOD, RELAY SERVER DEVICE, PROGRAM, AND RECORDING MEDIUM**

(30) Priority: 09.08.2007 JP 2007207411
(71) Applicant: Nippon Telegraph and Telephone Corporation, Chiyoda-ku Tokyo 100-8116 (JP)
(72) Inventor: ABE, Tsuyoshi, Musashino-shi Tokyo 180-8585 (JP); AOYAGI, Makiko, Musashino-shi Tokyo 180-8585 (JP); OKAMOTO, Manabu, Musashino-shi Tokyo 180-8585 (JP); ITOH, Hiroki, Musashino-shi Tokyo 180-8585 (JP); TAKAHASHI, Kenji, Musashino-shi Tokyo 180-8585 (JP); TAKIGUCHI, Hiroyoshi, Musashino-shi Tokyo 180-8585 (JP)
(74) Representative: MERH-IP Matias Erny Reichl Hoffmann
(86) International application number: PCT/JP2008/059825
(87) International publication number: WO 2009/019925

(57) **Abstract**

A first connection between a first terminal 10 and a relay server device 30 is established when the relay server 30, having a connection standby function, is triggered by first connection establishment request information transmitted from the first terminal 10 having a connection establishment request function but not having the connection standby function. A second connection between a second terminal 20 and the relay server device 30 is established when the relay server 30 is triggered by second connection establishment request information transmitted from the second terminal 20 having the connection establishment request function. First endpoint information corresponding to the first connection and the identifier of the first terminal 10 are stored in association with each other in a memory 30g of the relay server device 30.

## Description

### TECHNICAL FIELD

The present invention relates to technologies for communication through a network, and more specifically, to a technology for communication with one device having a function to send connection establishment request information to other device before the connection between the one device and the other device not being established, but not having a function to establish a connection with the other device when connection establishment request information being sent from the other device before the connection between the one device and the other device not being established.

### BACKGROUND ART

The Hyper Text Transfer Protocol (HTTP) is one communication protocol used on the Internet (refer to Non-patent literature 1, for example).
In HTTP communication, a two-way connection is first established between a client device and a server device in accordance with the Transmission Control Protocol (TCP), as described below (three-way handshake).
1. The client device sends connection establishment request information (SYN packet) to the server device that is in the standby state.
2. The server device sends to the client device acknowledgment information and connection establishment request information for the client device (ACK and SYN packets).
3. The client device sends acknowledgment information (ACK packet) to the server device.

Through the two-way connection established as described above, the client device sends request information to the server device, and the server device returns response information to the client device. Non-patent literature 1: "RFC 2616 Hypertext Transfer Protocol -- HTTP/1.1", retrieved through the Internet on April 9, 2008, URL:
http://www.ietf.org/rfc/rfc2616.txt

### DISCLOSURE OF THE INVENTION

### PROBLEMS TO BE SOLVED BY THE INVENTION

With that type of communication method, however, a second terminal which has not yet established a connection cannot start communication at a desired timing with a first terminal having a connection establishment request function to send connection establishment request information to a device without an established connection but not having a connection standby function to receive, in the standby state, connection establishment request information from a device and to establish a connection with the device.

With the conventional method, when the second terminal which has not yet established a connection communicates with the first terminal at a desired timing, the second terminal must first establish a connection with the first terminal by sending connection establishment request information to the first terminal. However, if the first terminal does not have the connection standby function, this processing cannot be executed. This type of problem is not a problem that can occur only with HTTP but is a problem that can occur with any type of communication protocol that establishes a connection between devices and uses the established connection for communication between the devices.

In view of the problem, an object of the present invention is to provide a technique that allows the second terminal which has not yet established a connection to start communication at a desired timing with the first terminal having the connection establishment request function but not having the connection standby function.

### MEANS TO SOLVE THE PROBLEMS

According to the present invention, transmission of first connection establishment request information to a relay server device having a connection standby function from a transmitter of a first terminal having a connection establishment request function but not having the connection standby function triggers the establishment of a first connection between the relay server device and the first terminal. A communication path endpoint association unit of the relay server device next stores an identifier and first endpoint information corresponding to the first connection in association with each other in a memory. Then, transmission of second connection establishment request information to the relay server device from a transmitter of a second terminal triggers the establishment of a second connection between the relay server device and the second terminal. Next, the transmitter of the second terminal sends, via the second connection, second request information having transmission information and the identifier. A receiver of the relay server device receives the second request information via the second connection. A communication path endpoint search unit of the relay server device searches through the memory for a match with the identifier included in the second request information and extracts the first endpoint information associated with the identifier. A transmitter of the relay server device sends the transmission information included in the second request information as response information to the first request information via the first connection corresponding to the first endpoint information. A receiver of the first terminal receives the transmission information via the first connection.

### EFFECTS OF THE INVENTION

According to the present invention, a second terminal which has not yet established a connection can start communication at a desired timing with a first terminal having a connection establishment request function but not having a connection standby function.

### BRIEF DESCRIPTION OF THE DRAWINGS

Fig. 1 is a conceptual diagram showing the structure of a communication system corresponding to a first aspect;
Fig. 2 is a conceptual diagram showing the structure of a communication system corresponding to a second aspect;
Fig. 3 is a conceptual diagram showing the entire structure of a communication system according to a first embodiment;
Fig. 4 is a block diagram showing a detailed structure of a user authentication device (corresponding to a first terminal) in the first embodiment;
Fig. 5 is a block diagram showing a detailed structure of a user device (corresponding to a second terminal) in the first embodiment;
Fig. 6 is a block diagram showing a detailed structure of a relay server device in the first embodiment;
Fig. 7 is a block diagram showing a detailed structure of a target server device in the first embodiment;
Fig. 8 is a sequence diagram illustrating communication processing in the first embodiment;
Fig. 9 is a sequence diagram illustrating the communication processing in the first embodiment;
Fig. 10 is a sequence diagram illustrating the communication processing in the first embodiment;
Fig. 11 is a sequence diagram illustrating the communication processing in the first embodiment;
Fig. 12 is a conceptual diagram showing the entire structure of a communication system according to a second embodiment;
Fig. 13 is a block diagram showing a detailed structure of a relay server device in the second embodiment;
Fig. 14 is a sequence diagram illustrating communication processing in the second embodiment;
Fig. 15 is a sequence diagram illustrating the communication processing in the second embodiment;
Fig. 16 is a conceptual diagram showing the entire structure of a communication system according to a third embodiment;
Fig. 17 is a block diagram showing a detailed structure of a user authentication device (corresponding to a first terminal) in the third embodiment;
Fig. 18 is a block diagram showing a detailed structure of a user device (corresponding to a second terminal) in the third embodiment;
Fig. 19 is a block diagram showing a detailed structure of a relay server device in the third embodiment;
Fig. 20 is a block diagram showing a detailed structure of a target server device in the third embodiment;
Fig. 21 is a sequence diagram illustrating communication processing in the third embodiment;
Fig. 22 is a sequence diagram illustrating the communication processing in the third embodiment;
Fig. 23 is a sequence diagram illustrating the communication processing in the third embodiment;
Fig. 24 is a conceptual diagram showing the entire structure of a communication system according to a fourth embodiment;
Fig. 25 is a block diagram showing a detailed structure of a user authentication device (first terminal) in the fourth embodiment;
Fig. 26 is a block diagram showing a detailed structure of a relay server device;
Fig. 27 is a sequence diagram illustrating communication processing in the fourth embodiment;
Fig. 28 is a sequence diagram illustrating the communication processing in the fourth embodiment;
Fig. 29 is a conceptual diagram showing the entire structure of a communication system according to a fifth embodiment;
Fig. 30 is a block diagram showing a detailed structure of a user authentication device in the fifth embodiment;
Fig. 31 is a block diagram showing a detailed structure of a relay server device in the fifth embodiment;
Fig. 32 is a block diagram showing a detailed structure of a target server device in the fifth embodiment;
Fig. 33 is a sequence diagram illustrating communication processing in the fifth embodiment;
Fig. 34 is a sequence diagram illustrating the communication processing in the fifth embodiment;
Fig. 35 is a conceptual diagram showing the entire structure of a communication system according to a sixth embodiment;
Fig. 36 is a block diagram showing a detailed structure of a relay server device in the sixth embodiment; and

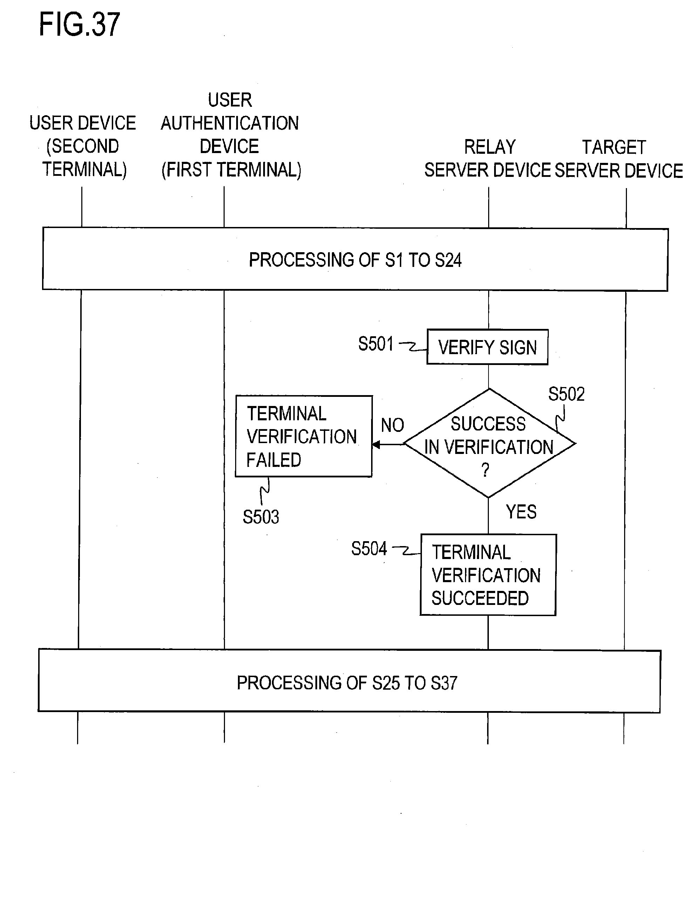

Fig. 37 is a sequence diagram illustrating communication processing in the sixth embodiment.

### DESCRIPTION OF REFERENCE NUMERALS

1, 100, 200, 300, 400, 500, 600, 700: Communication systems
10, 110: First terminals
20, 120: Second terminals
30, 130, 230, 330, 430, 530, 630, 730: Relay server devices
210, 410, 510, 610: User authentication devices (first terminals)
220, 420: User devices (second terminals)
ACK: Acknowledgment information
AUTRQ: Authentication request information
AUTRS: Authentication result information
AUT: Authentication information
CER: Public key certificate
ID: Identifier
IND: Input directive information
PK-1: First public key
PK-2: Second public key
RQ-1: First request information
RQ-2: Second request information
ISADR: Relay server device address information
SN-1: First socket number
SN-2: Second socket number
SN-3: Third socket number
SN-4: Fourth socket number
SID: Session information
SIGN: Signature information
SK-1: First secret key
ISPN-0: Relay server device standby port number
ISPN-1: Relay-server-device-side first port number
ISPN-2: Relay-server-device-side second port number
ISPN-4: Relay-server-device-side fourth port number
SRQ: Service request information
SERV: Service information
SYN: Connection establishment request information
T-1: First endpoint information
T-2: Second endpoint information
TID: Temporary identifier
TSADR: Target server device address information
TSPN-0: Target server device standby port number
TSPN-3: Target-server-device-side third port number
TR: Transmission information
UADR: User device address information
AUTADR: User authentication device address information
AUTPN-1: User-authentication-device-side first port number
AUTPN-4: User-authentication-device-side fourth port number
AUTID: User authentication device identifier
UPN-2: User-device-side second port number
UPN-3: User-device-side third port number

### BEST MODES FOR CARRYING OUT THE INVENTION

Now, best modes for carrying out the present invention will be described with reference to the drawings.

### [Basic Aspects]

The basic aspects of the present invention will now be described.

### [First Aspect]

The basic structure of a first aspect will be exemplified below.

### [Basic Structure of First Aspect]

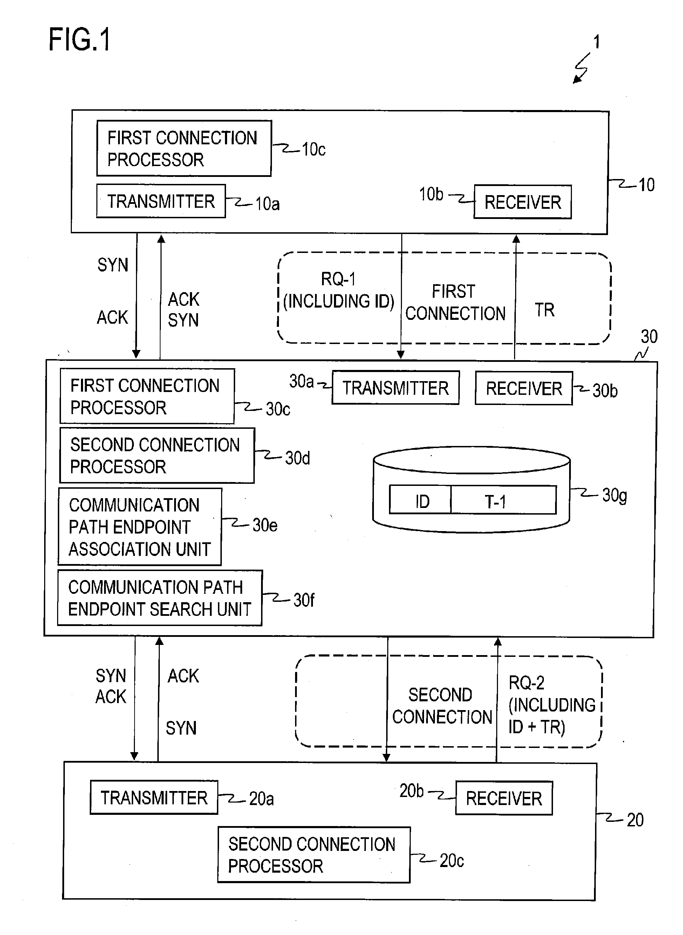

Fig. 1 is a conceptual diagram showing the structure of a communication system 1 corresponding to the first aspect.
As shown in Fig. 1, the communication system 1 has a first terminal 10 having a connection establishment request function for sending connection establishment request information to a device with which a connection has not been established, but not having a connection standby function for receiving, in a standby state, connection establishment request information from a device and establishing a connection with the device; a second terminal 20 having the connection establishment request function; and a relay server device 30 having the connection standby function.

### [Basic Processing in First Aspect]

The basic processing in the first aspect will be exemplified next.
The transmission of first connection establishment request information from a transmitter 10a of the first terminal 10 to the relay server device 30 triggers the establishment of a first connection between the relay server device 30 and the first terminal 10 by a first connection processor 10c of the first terminal 10 and a first connection processor 30c of the relay server device 30.

More specifically, the transmitter 10a of the first terminal 10 sends the first connection establishment request information (SYN) to the relay server device 30. The reception of the first connection establishment request information (SYN) by a receiver 30b of the relay server device 30 triggers transmission of acknowledgment information (ACK) and the first connection establishment request information (SYN) to the first terminal 10 by a transmitter 30a of the relay server device 30. The reception of the information by a receiver 10b of the first terminal 10 triggers transmission of acknowledgment information (ACK) to the relay server device 30 by the transmitter 10a of the first terminal 10, and the receiver 30b of the relay server device 30 receives the acknowledgment information (ACK). Through this processing, the first connection processor 30c and the first connection processor 10c establish a first connection between the relay server device 30 and the first terminal 10.

Next, the transmitter 10a of the first terminal 10 sends first request information (RQ-1) having the identifier (ID) of the first terminal 10 via the first connection, and the receiver 30b of the relay server device 30 receives the first request information (RQ-1) via the first connection. A communication path endpoint association unit 30e of the relay server device 30 stores the identifier (ID) of the first terminal provided by the first request information (RQ-1) and first endpoint information (T-1) corresponding to the first connection, in association with each other, in a memory 30g.

The transmission of second connection establishment request information to the relay server device by a transmitter 20a of the second terminal 20 triggers the establishment of a second connection between the relay server device 30 and the second terminal 20, by a second connection processor 30d of the relay server device 30 and a second connection processor 20c of the second terminal 20.

More specifically, the transmitter 20a of the second terminal 20 first sends the second connection establishment request information (SYN) to the relay server device 30. The reception of the second connection establishment request information (SYN) by the receiver 30b of the relay server device 30 triggers the transmission of acknowledgment information (ACK) and the second connection establishment request information (SYN) to the second terminal 20, by the transmitter 30a of the relay server device 30. The reception of the information by a receiver 20b of the second terminal 20 triggers the transmission of acknowledgment information (ACK) to the relay server device 30 by the transmitter 20a of the second terminal 20, and the receiver 30b of the relay server device 30 receives the acknowledgment information (ACK). Through this processing, the second connection processor 30c and the second connection processor 20c establish the second connection between the relay server device 30 and the second terminal 20.

Next, the transmitter 20a of the second terminal 20 sends second request information (RQ-2) having transmission information (TR) and the identifier (ID) of the first terminal via the second connection, and the receiver 30b of the relay server device 30 receives the second request information (RQ-2) via the second connection. A communication path endpoint search unit 30f of the relay server device 30 searches through the memory 30g for a match with the identifier (ID) of the first terminal provided by the second request information (RQ-2) and extracts the first endpoint information (T-1) associated with the identifier (ID) of the first terminal.

The transmitter 30a of the relay server device 30 sends the transmission information (TR) provided by the second request information as response information to the first request information via the first connection corresponding to the extracted first endpoint information (T-1), and the receiver 10b of the first terminal 10 receives the transmission information (TR) via the first connection.

### [Features of First Aspect]

In the first aspect, the transmission of the first connection establishment request information to the relay server device 30 having the connection standby function by the first terminal 10 having the connection establishment request function but not having the connection standby function leads to the establishment of the first connection between the first terminal 10 and the relay server device 30. The transmission of the second connection establishment request information to the relay server device 30 having the connection standby function by the second terminal 20 having the connection establishment request function leads to the establishment of the second connection between the second terminal 20 and the relay server device 30. In the first aspect, the first endpoint information corresponding to the first connection and the identifier of the first terminal 10 are stored in association with each other in the memory 30g of the relay server device 30. This allows the second terminal 20 to send the identifier via the second connection and allows the relay server device 30 to search through the memory 30g for a match with the identifier and to extract the endpoint of the first connection.

As has been described above, the second terminal 20 can establish, at a desired timing, the communication path from the second terminal 20 to the first terminal 10 via the second connection, the relay server device 30, and the first connection and can start communication with the first terminal 10.

The identifier of the first terminal 10 can be a fixed value specific to the first terminal 10 or can be specified randomly each time the identifier of the first terminal 10 is sent. In the configuration in which the identifier of the first terminal 10 is specified randomly each time it is sent, even if the identifier is stolen through eavesdropping by a third party, the problem of the third party being able to access the first terminal 10 by using the identifier and then extracting the endpoint of the first connection fraudulently and semipermanently can be avoided.

It is preferable that the identifier provided by the second request information be identified by information input via an input unit (not shown), which is the user interface of the second terminal 20. In that case, the communication path from the second terminal 20 to the first terminal 10 is established only when a user knowing the information identifying the identifier of the first terminal 10 is using the second terminal 20. This allows the right to access the first terminal 10 to be managed. An example of the information identifying the identifier of the first terminal 10 input to the input unit of the second terminal 20 is the identifier itself or non-identifier information that can identify the identifier uniquely in the second terminal 20. An example of the non-identifier information that can identify the identifier uniquely is the URL (uniform resource locator) of the first terminal 10 associated with the identifier in the second terminal 20.

### [Second Aspect]

The basic structure of a second aspect will be exemplified next.

### [Basic Structure of Second Aspect]

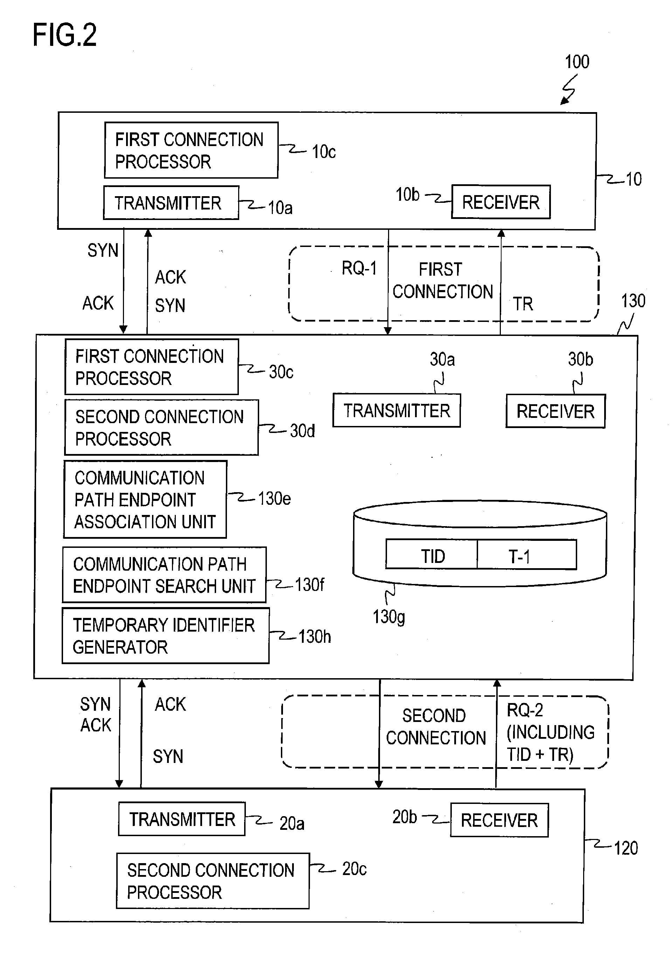

Fig. 2 is a conceptual diagram showing the structure of a communication system 100 corresponding to the second aspect.
As shown in Fig. 2, the communication system 100 has a first terminal 10 having the connection establishment request function but not having the connection standby function, a second terminal 120 having the connection establishment request function, and a relay server device 130 having the connection standby function. In Fig. 2, elements identical to those in Fig. 1 are indicated by the same reference numerals.

### [Basic Processing in Second Aspect]

The basic processing in the second aspect will be exemplified next.
The transmission of first connection establishment request information to the relay server device 130 having the connection standby function, by a transmitter 10a of the first terminal 10 triggers the establishment of a first connection between the relay server device 130 and the first terminal 10 by a first connection processor 10c of the first terminal 10 and a first connection processor 30c of the relay server device 130.

The transmitter 10a of the first terminal 10 sends first request information (RQ-1) via the first connection, and a receiver 30b of the relay server device 130 receives the first request information (RQ-1) via the first connection. A communication path endpoint association unit 130e of the relay server device 130 stores a temporary identifier (TID) consisting of a temporarily generated random character string (generated by a temporary identifier generator 130h, for example) and first endpoint information (T-1) corresponding to the first connection, in association with each other, in a memory 130g.

The transmission of second connection establishment request information to the relay server device 130 by a transmitter 20a of the second terminal 120 triggers the establishment of a second connection between the relay server device 130 and the second terminal 120 by a second connection processor 30d of the relay server device 130 and a second connection processor 20c of the second terminal 120.

The transmitter 20a of the second terminal 120 sends second request information (RQ-2) having transmission information (TR) and a temporary identifier (TID) via the second connection, and the receiver 30b of the relay server device 130 receives the second request information (RQ-2) via the second connection. A communication path endpoint search unit 130f of the relay server device 130 searches through the memory 130g for a match with the temporary identifier (TID) provided by the second request information (RQ-2) and extracts the first endpoint information (T-1) associated with the temporary identifier (TID).

The transmitter 30a of the relay server device 130 sends the transmission information (TR) provided by the second request information as response information to the first request information, via the first connection corresponding to the extracted first endpoint information (T-1), and the receiver 10b of the first terminal 10 receives the transmission information (TR) via the first connection.

### [Features of Second Aspect]

In the second aspect, the transmission of the first connection establishment request information to the relay server device 130 having the connection standby function by the first terminal 10 having the connection establishment request function but not having the connection standby function leads to the establishment of the first connection between the first terminal 10 and the relay server device 130. The transmission of the second connection establishment request information to the relay server device 130 having the connection standby function by the second terminal 120 having the connection establishment request function leads to the establishment of the second connection between the second terminal 120 and the relay server device 130. In the second aspect, the first endpoint information corresponding to the first connection and the temporary identifier which is generated temporarily at random are stored in association with each other in the memory 130g of the relay server device 130. This allows the second terminal 120 to send the temporary identifier via the second connection and allows the relay server device 130 to search through the memory 130g for a match with the temporary identifier and to extract the endpoint of the first connection.

As has been described above, the second terminal 120 can establish, at a desired timing, a communication path from the second terminal 120 to the first terminal 10 via the second connection, the relay server device 130, and the first connection and can start communication with the first terminal 10.

The temporary identifier sent from the second terminal 120 to the relay server device 130 is data that have been generated temporarily at random. Accordingly, even if the temporary identifier is stolen through eavesdropping by a third party, the problem of the third party being able to access the first terminal 10 by using the temporary identifier and then extracting the endpoint of the first connection fraudulently and semipermanently can be avoided. The temporary identifier does not require as tight security management as the identifier of the first terminal 10 requires, and the data is easy to handle. Since the temporary identifier that is easy to handle in terms of security management can be used, the second aspect can be applied easily to a wider range of applications.

The system may be configured such that the transmitter 30a of the relay server device 130 sends the temporary identifier to the first terminal 10; an output unit (not shown), which is the user interface of the first terminal 10, outputs the temporary identifier; an input unit (not shown), which is the user interface of the second terminal 120, accepts the input of the temporary identifier; and the second request information includes the temporary identifier. In that case, the communication path from the second terminal 120 to the first terminal 10 is established only when a user who owns the first terminal 10 is using the second terminal 120. Therefore, the right to access the first terminal 10 can be managed.

### [First Embodiment]

A first embodiment is an embodiment where the first aspect is applied to a single sign-on system. The first embodiment will now be described.

### [Structure]

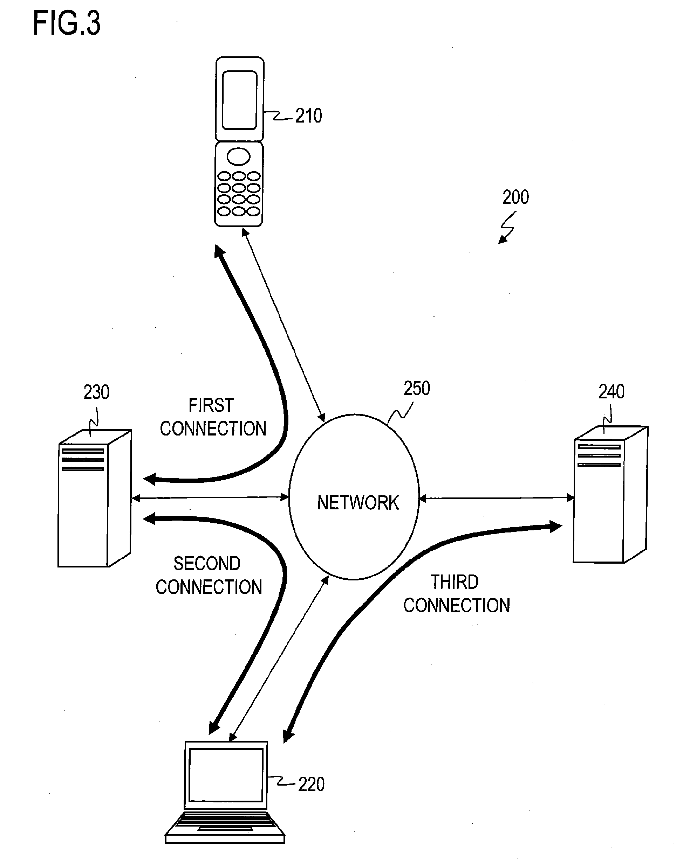

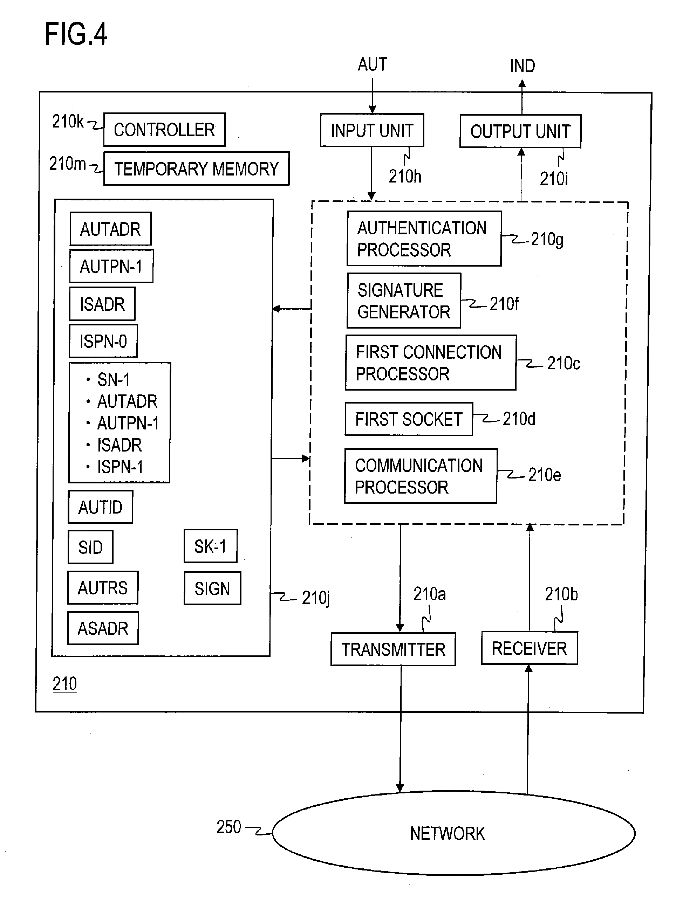

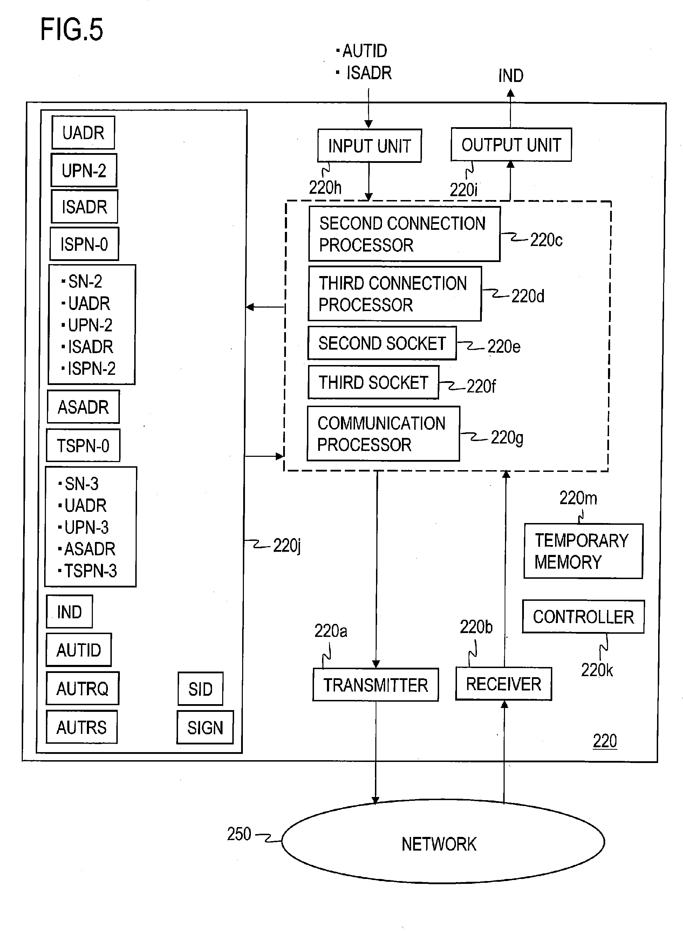

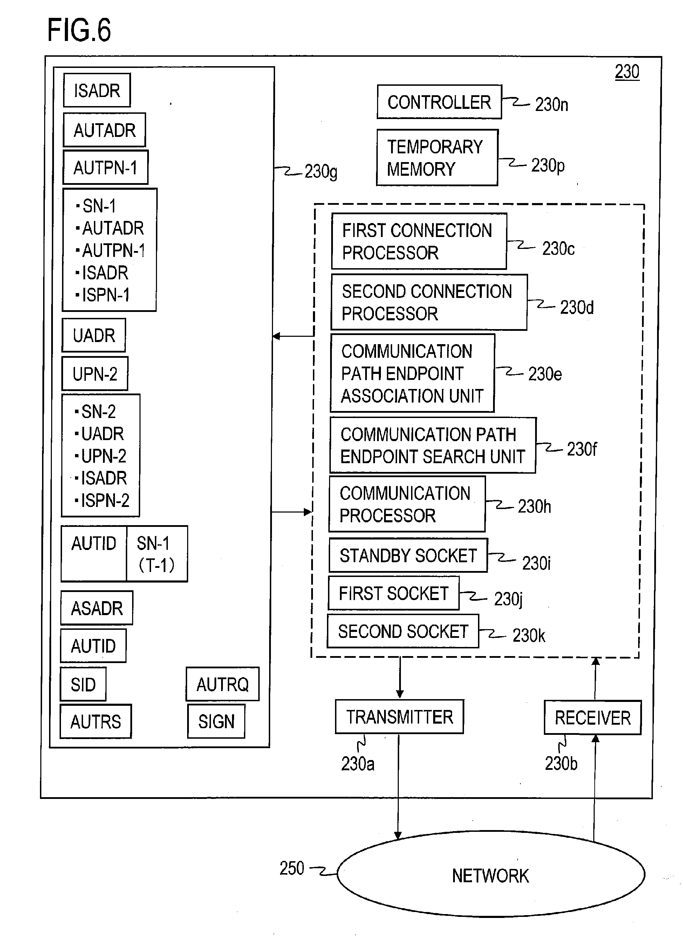

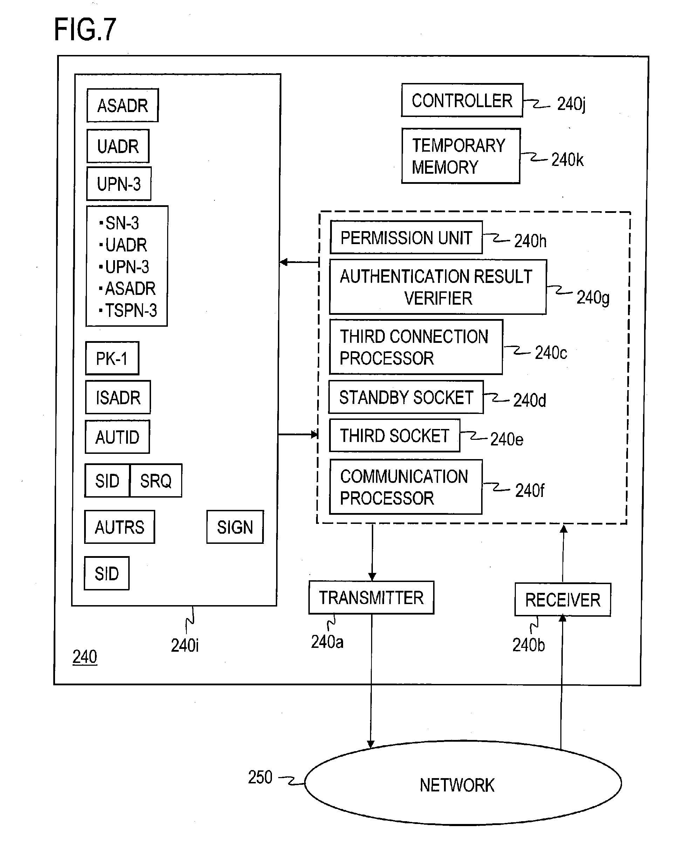

Fig. 3 is a conceptual diagram showing the entire structure of a communication system 200 of the first embodiment. Fig. 4 is a block diagram showing a detailed structure of a user authentication device 210 (corresponding to the first terminal) in the first embodiment. Fig. 5 is a block diagram showing a detailed structure of a user device 220 (corresponding to the second terminal) in the first embodiment. Fig. 6 is a block diagram showing a detailed structure of a relay server device 230 in the first embodiment. Fig. 7 is a block diagram showing a detailed structure of a target server device 240 in the first embodiment.

As shown in Fig. 3, the communication system 200 of the first embodiment includes the user authentication device 210, the user device 220, the relay server device 230, and the target server device 240, which are configured to allow communication through a network 250 such as the Internet. Fig. 3 shows an instance that the number of each of the user authentication device 210, the user device 220, the relay server device 230, and the target server device 240 is one. But the number of at least one of the user authentication device 210, the user device 220, the relay server device 230, and the target server device 240 may be two or more.

The target server device 240 is a server device that provides service information to the user device 220 used by the user. The user authentication device 210 is a device that authenticates the user using the user device 220. The result of user authentication made by the user authentication device 210 is sent to the target server device 240. The target server device 240 recognizes the user as an authorized user from the result and provides the service information to the user device 220. The result of user authentication made by the user authentication device 210 can also be passed to another target server device, so that once the user is authenticated, the user can use a plurality of target server devices (single sign-on).

As shown in Fig. 4, the shown user authentication device 210 includes a transmitter 210a, a receiver 210b, a first connection processor 210c, a first socket 210d, a communication processor 210e, a signature generator 210f, an authentication processor 210g, an input unit 210h and an output unit 210i, which are user interfaces, a memory 210j, a controller 210k for controlling the user authentication device 210, and a temporary memory 210m for successively storing data in the processing process. The first socket 210d is generated by the first connection processor 210c (this will be described in detail later).

The shown user authentication device 210 is configured by reading predetermined programs (an operating system (OS), an application program, etc.) into a known computer having an input device such as a keyboard, input keys, a mouse, or a touch screen, an output device such as a display unit or a speaker, a central processing unit (CPU), a random access memory (RAM), a read-only memory (ROM), and the like and by executing those programs on the CPU. Known computers that can configure the user authentication device 210 described above include a personal computer, a personal digital assistant (PDA) terminal, and a cellular phone terminal. In this embodiment, the user authentication device 210 configured by using a cellular phone terminal, which is a mobile communication terminal, will be described as an example. The user authentication device 210 has the connection establishment request function but does not have the connection standby function.

As shown in Fig. 5, the shown user device 220 includes a transmitter 220a, a receiver 220b, a second connection processor 220c, a third connection processor 220d, a second socket 220e, a third socket 220f, a communication processor 220g, an input unit 220h, an output unit 220i, a memory 220j, a controller 220k for controlling the user device 220, and a temporary memory 220m for successively storing data in the processing process. The second socket 220e and the third socket 220f are generated by the second connection processor 220c and the third connection processor 220d, respectively, when the connection is established (this will be described in detail later).

The shown user device 220 is configured by reading predetermined programs (an operating system (OS), an application program such as a browser, etc.) into a known computer having an input device such as a keyboard, input keys, a mouse, or a touch screen, an output device such as a display unit, a speaker, or a vibrator, a CPU, a RAM, a ROM, and the like and by executing the programs on the CPU. Known computers that can configure the user device 220 described above include a personal computer, a PDA terminal, and a cellular phone terminal. The user device 220 has the connection establishment request function but does not have the connection standby function.

As exemplified in Fig. 6, the shown relay server device 230 includes a transmitter 230a, a receiver 230b, a first connection processor 230c, a second connection processor 230d, a communication path endpoint association unit 230e, a communication path endpoint search unit 230f, a memory 230g, a communication processor 230h, a standby socket 230i, a first socket 230j, a second socket 230k, a controller 230n for controlling the relay server device 230, and a temporary memory 230p for successively storing data in the processing process. The first socket 230j and the second socket 230k are generated respectively by the first connection processor 230c and the second connection processor 230d that are generated when the connection is established (this will be described in detail later).

The shown relay server device 230 is configured by reading predetermined programs into a known computer having a CPU, a RAM, a ROM, and the like and by executing those programs on the CPU. Known computers that can configure the relay server device 230 include a server machine, for example. The relay server device 230 has the connection standby function.

As exemplified in Fig. 7, the shown target server device 240 includes a transmitter 240a, a receiver 240b, a third connection processor 240c, a standby socket 240d, a third socket 240e, a communication processor 240f, an authentication result verifier 240g, a permission unit 240h, a memory 240i, a controller 240j for controlling the target server device 240, and a temporary memory 240k for successively storing data in the processing process. The third socket 240e is generated by the third connection processor 240c that is generated when the connection is established (this will be described in detail later).

The shown target server device 240 is configured by reading predetermined programs into a known computer having a CPU, a RAM, a ROM, and the like and by executing those programs on the CPU. Known computers that can configure the target server device 240 include a server machine, for example. The target server device 240 has the connection standby function.

### [Processing]

The processing in the first embodiment will be described next.

### [Preprocessing]

In preprocessing, user authentication device address information (AUTADR), which is the address of the user authentication device 210, relay server device address information (ISADR), which is the address of the relay server device 230, a relay server device standby port number (ISPN-0), which is a port number assigned to the standby socket 230i of the relay server device 230, a first secret key (SK-1) of the public key encryption system, and a user authentication device identifier (AUTID), which is the identifier of the user authentication device 210, are stored in the storage section 210j of the user authentication device 210.

User device address information (UADR), which is the address of the user device 220, the relay server device standby port number (ISPN-0), which is the port number assigned to the standby socket 230i of the relay server device 230, target server device address information (TSADR), which is the address of the target server device 240, and a target server device standby port number (TSPN-0), which is a port number assigned to the standby socket 240d of the target server device 240, are stored in the memory 220j of the user device 220.

In the memory 230g of the relay server device 230, the relay server device address information (ISADR), which is the address of the relay server device 230, is stored.
Also the target server device address information (TSADR), which is the address of the target server device 240, and a first public key (PK-1) corresponding to the first secret key (SK-1), are stored in the memory 240i of the target server device 240.

### [Communication Processing]

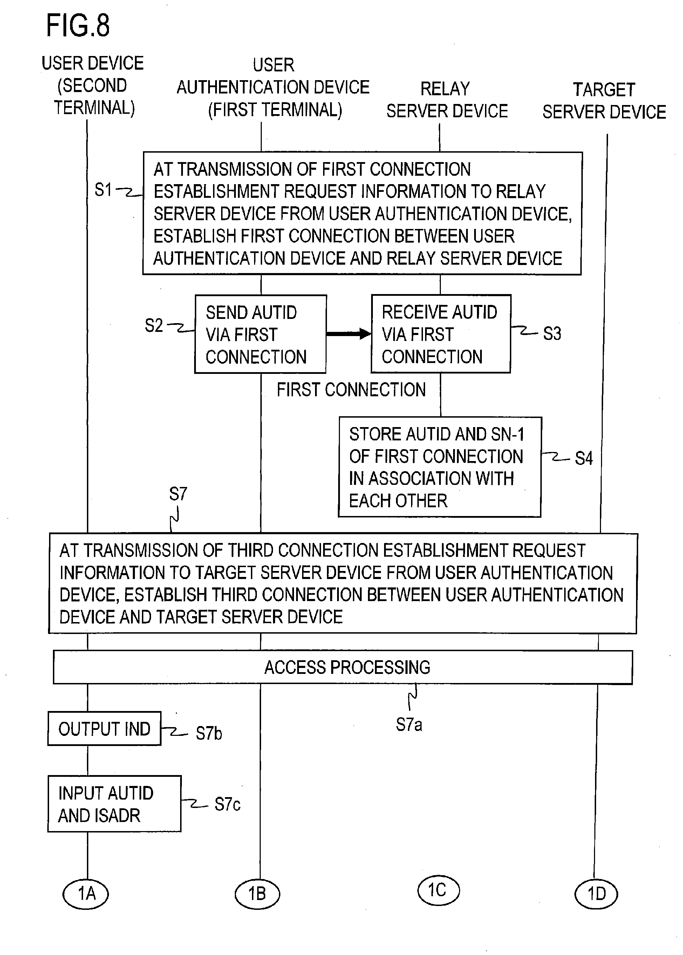

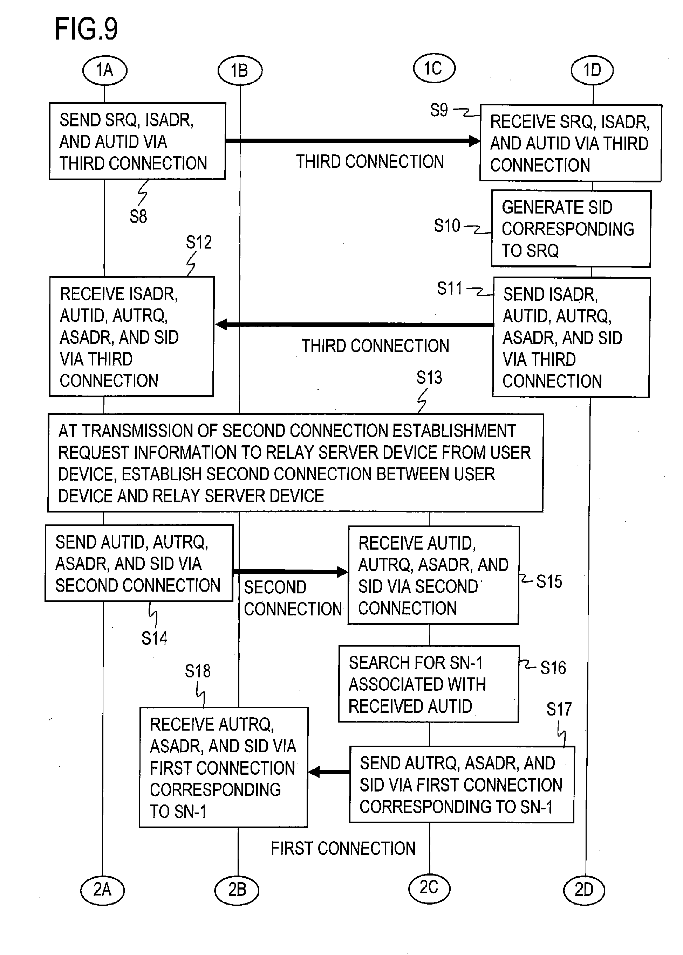

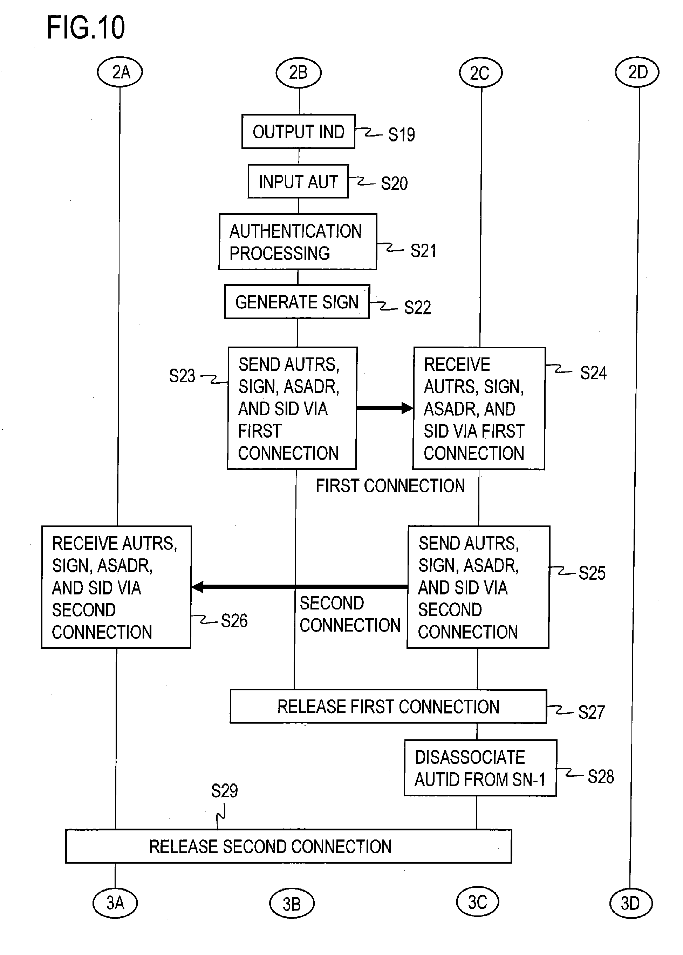

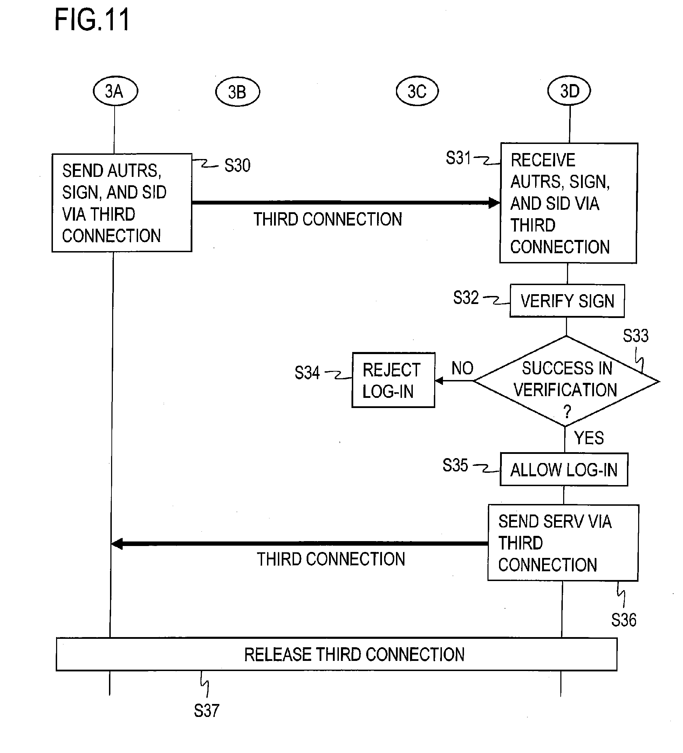

Figs. 8 to 11 are sequence diagrams illustrating communication processing in the first embodiment. With reference to these diagrams, the communication processing in the first embodiment will now be described.
Startup of the user authentication device 210 (Fig. 4) or the like causes the transmitter 210a of the user authentication device 210 to send first connection establishment request information to the relay server device 230, which is in the standby state. This causes the first connection processor 230c of the relay server device 230 and the first connection processor 210c of the user authentication device 210 to establish a first connection between the relay server device 230 and the user authentication device 210 (step S1).
The processing of step S1 is implemented by the known TCP three-way handshake, for example. Details of the processing in step S1 will be described below.

### [Details of step S1]

The first connection processor 210c of the user authentication device 210 (Fig. 4) generates the first socket 210d and stores the port number assigned to the socket, namely, a user-authentication-device-side first port number (AUTPN-1), in the memory 210j. Then, the first connection processor 210c reads the user authentication device address information (AUTADR), the user-authentication-device-side first port number (AUTPN-1), the relay server device address information (ISADR), and the relay server device standby port number (ISPN-0) from the memory 210j and generates first connection establishment request information (for example, a SYN packet) including these pieces of information. The generated first connection establishment request information is sent to the transmitter 210a, and the transmitter 210a sends it through the network 250 to the relay server device 230.

The first connection establishment request information is received by the receiver 230b of the relay server device 230 (Fig. 6) and is sent through the standby socket 230i to the newly generated first connection processor 230c. The first connection processor 230c first generates the first socket 230j, assigns a relay-server-device-side first port number (ISPN-1) to that socket, and gives a first socket number (SN-1). The first connection processor 230c associates the first socket number (SN-1), the user authentication device address information (AUTADR), the user-authentication-device-side first port number (AUTPN-1), the relay server device address information (ISADR), and the relay-server-device-side first port number (ISPN-1) with one another and stores them in the memory 230g. The socket number is a socket file descriptor in C, an instance number of an output stream object in Java (registered trademark), or the like.

The first connection processor 230c reads the user authentication device address information (AUTADR), the user-authentication-device-side first port number (AUTPN-1), the relay server device address information (ISADR), and the relay-server-device-side first port number (ISPN-1) from the memory 230g and generates first connection establishment request information including these pieces of information. The first connection processor 230c also generates acknowledgment information and sends the generated first connection establishment request information and acknowledgment information (for example, ACK and SYN packets) to the transmitter 230a. The transmitter 230a sends these pieces of information through the network 250 to the user authentication device 210.

The first connection establishment request information and the acknowledgment information are received by the receiver 210b of the user authentication device 210 (Fig. 4) and are sent through the first socket 210d to the first connection processor 210c. The first connection processor 210c associates the user authentication device address information (AUTADR), the user-authentication-device-side first port number (AUTPN-1), the relay server device address information (ISADR), and the relay-server-device-side first port number (ISPN-1) with one another and stores these pieces of information in association with the first socket number (SN-1) assigned to the first socket 210d, in the memory 210j.

The first connection processor 210c generates acknowledgment information (for example, an ACK packet) and sends it from the transmitter 210a to the relay server device 230. When the acknowledgment information is received by the relay server device 230, the first connection is established between the relay server device 230 and the user authentication device 210 (the description of [Details of step S1] is now completed).

When the first connection is established, the communication processor 210e of the user authentication device 210 (Fig. 4) reads the user authentication device identifier (AUTID), which is an identifier of the user authentication device 210, from the memory 210j and sends the identifier to the first socket 210d. The first socket 210d sends the user authentication device identifier (AUTID) to the transmitter 210a, and the transmitter 210a sends first request information (RQ-1) including the user authentication device identifier (AUTID) via the first connection (step S2). The sent first request information (RQ-1) is received by the receiver 230b of the relay server device 230 (Fig. 6) via the first connection (step S3). More specifically, the transmitter 210a of the user authentication device 210 (Fig. 4) sends the first request information (RQ-1) including a TCP header which includes the user-authentication-device-side first port number (AUTPN-1) (transmission source port number) and the relay-server-device-side first port number (ISPN-1) (transmission destination port number), corresponding to the first socket number (SN-1) stored in the memory 210j; an IP header which includes the user authentication device address information (AUTADR) (transmission source address) and the relay server device address information (ISADR) (transmission destination address); and payload information, which includes the user authentication device identifier (AUTID), through the network 250, and the first request information (RQ-1) is received by the receiver 230b of the relay server device 230 (Fig. 6).

The user authentication device identifier (AUTID) included in the first request information (RQ-1) received by the receiver 230b of the relay server device 230 is sent through the first socket 230j to the communication path endpoint association unit 230e. The communication path endpoint association unit 230e stores the user authentication device identifier (AUTID) and the first socket number (SN-1) (corresponding to first endpoint information) corresponding to the first connection in association with each other in the memory 230g (step S4).

The transmitter 220a of the user device 220 sends third connection establishment request information to the target server device 240 (Fig. 7), which is in the standby state. This causes the third connection processor 240c of the target server device 240 and the third connection processor 220d of the user device 220 to establish a third connection between the target server device 240 and the user device 220 (step S7).

The processing of step S7 is performed in the same way as in step S1, for example. Details of step S7 will now be described in detail.

### [Details of step S7]

The third connection processor 220d of the user device 220 (Fig. 5) generates a third socket 220f and stores a port number assigned to the socket, namely, a user-device-side third port number (UPN-3), in the memory 220j. The third connection processor 220d reads the user device address information (UADR), the user-device-side third port number (UPN-3), the target server device address information (TSADR), and the target server device standby port number (TSPN-0) from the memory 220j and generates third connection establishment request information (for example, a SYN packet) including these pieces of information. The generated third connection establishment request information is sent to the transmitter 220a, and the transmitter 220a sends the information through the network 250 to the target server device 240.

The third connection establishment request information is received by the receiver 240b of the target server device 240 (Fig. 7) and is sent through the standby socket 240d to the newly generated third connection processor 240c. The third connection processor 240c first generates a third socket 240e, assigns a target-server-device-side third port number (TSPN-3) to the socket, and gives a third socket number (SN-3). The third connection processor 240c associates the third socket number (SN-3), the user device address information (UADR), the user-device-side third port number (UPN-3), the target server device address information (TSADR), and the target-server-device-side third port number (TSPN-3) with one another and stores them in the memory 240i.

The third connection processor 240c reads the user device address information (UADR), the user-device-side third port number (UPN-3), the target server device address information (TSADR), and the target-server-device-side third port number (TSPN-3) from the memory 240i and generates third connection establishment request information including these pieces of information. The third connection processor 240c also generates acknowledgment information and sends the generated third connection establishment request information and acknowledgment information (for example, ACK and SYN packets) to the transmitter 240a. The transmitter 240a sends these pieces of information through the network 250 to the user device 220.

The third connection establishment request information and the acknowledgment information are received by the receiver 220b of the user device 220 (Fig. 5) and are sent through the third socket 220f to the third connection processor 220d. The third connection processor 220d associates the user device address information (UADR), the user-device-side third port number (UPN-3), the target server device address information (TSADR), and the target-server-device-side third port number (TSPN-3) with one another and stores them in association with the third socket number (SN-3) corresponding to the third socket 220f, in the memory 220j.

The third connection processor 220d generates acknowledgment information (for example, an ACK packet) and sends it from the transmitter 220a to the target server device 240. When the acknowledgment information is received by the target server device 240, the third connection is established between the target server device 240 and the user device 220 (the description of [Details of step S7] is now completed).

Then, the communication processor 220g of the user device 220 sends a log-in request to the third socket 220f; the third socket 220f sends the information to the transmitter 220a; and the transmitter 220a sends the information via the third connection to the target server device 240. The communication processor 240f of the target server device 240 sends input directive information (IND) to the third socket 240e; the third socket 240e sends the information to the transmitter 240a; and the transmitter 240a sends the information via the third connection to the user device 220 (step S7a). The input directive information (IND) is received by the receiver 220b of the user device 220, and this causes the output unit 220i of the user device 220 (Fig. 5) to output the input directive information (IND), which prompts the input of the user authentication device identifier (AUTID) and the relay server device address information (ISADR) (step S7b). In response to the prompt, the user inputs the user authentication device identifier (AUTID) of the user authentication device 210 and the relay server device address information (ISADR) of the relay server device 230, via the input unit 220h, and the communication processor 220g stores the input information in the memory 220j (step S7c). For example, the user inputs "https://sasso.jp/abe" to the input unit 220h. The part "https://sasso.jp" is the relay server device address information (ISADR), and the part "abe" is the user authentication device identifier (AUTID).

The communication processor 220g of the user device 220 (Fig. 5) reads the relay server device address information (ISADR) and the user authentication device identifier (AUTID) from the memory 220j and sends these pieces of information together with service request information (SRQ) to the third socket 220f. The third socket 220f sends these pieces of information to the transmitter 220a, and the transmitter 220a sends these pieces of information via the third connection to the target server device 240 (step S8). The sent information is received via the third connection by the receiver 240b of the target server device 240 (Fig. 7) (step S9). More specifically, the transmitter 220a of the user device 220 (Fig. 5) sends information having a TCP header which includes the user-device-side third port number (UPN-3) (transmission source port number) and the target-server-device-side third port number (TSPN-3) (transmission destination port number), corresponding to the third socket number (SN-3) stored in the memory 220j; an IP header having the user device address information (UADR) (transmission source address) and the target server device address information (TSADR) (transmission destination address); and payload information having the relay server device address information (ISADR), the user authentication device identifier (AUTID), and the service request information (SRQ), through the network 250, and the information is received by the receiver 240b of the target server device 240 (Fig. 7).

The relay server device address information (ISADR), the user authentication device identifier (AUTID), and the service request information (SRQ) included in the received information are sent through the third socket 240e to the communication processor 240f. The communication processor 240f stores the relay server device address information (ISADR) and the user authentication device identifier (AUTID) in the memory 240i, generates session information (SID) corresponding to the service request information (SRQ), and stores the service request information (SRQ) and the session information (SID) in association with each other in the memory 240i (step S10).

The communication processor 240f reads the relay server device address information (ISADR), the user authentication device identifier (AUTID), the target server device address information (TSADR), and the session information (SID) from the memory 240i, and sends these pieces of information together with authentication request information (AUTRQ) to the third socket 240e. The third socket 240e sends these pieces of information to the transmitter 240a. The transmitter 240a sends these pieces of information as response information to the information sent in step S8, via the third connection, to the user device 220 (Fig. 5) (step S11). The sent information is received via the third connection by the receiver 220b of the user device 220 (step S12). More specifically, the transmitter 240a of the target server device 240 (Fig. 7) sends information having a TCP header which includes the user-device-side third port number (UPN-3) (transmission destination port number) and the target-server-device-side third port number (TSPN-3) (transmission source port number), corresponding to the third socket number (SN-3) stored in the memory 240i; an IP header having the user device address information (UADR) (transmission destination address) and the target server device address information (TSADR) (transmission source address); and payload information having the relay server device address information (ISADR), the user authentication device identifier (AUTID), the target server device address information (TSADR), the session information (SID), and the authentication request information (AUTRQ), through the network 250, and the information is received by the receiver 220b of the user device 220 (Fig. 5).

The relay server device address information (ISADR), the user authentication device identifier (AUTID), the target server device address information (TSADR), the session information (SID), and the authentication request information (AUTRQ) included in the received information are sent through the third socket 220f to the communication processor 220g and are stored in the memory 220j.

The transmitter 220a of the user device 220 sends second connection establishment request information to the relay server device 230 (Fig. 6), which is in the standby state. This causes the second connection processor 230d of the relay server device 230 and the second connection processor 220c of the user device 220 to establish a second connection between the relay server device 230 and the user device 220 (step S13).

The processing in step S13 is performed in the same way as in step S1, for example. Details of step S 13 will be described in detail next.

### [Details of step S13]

The second connection processor 220c of the user device 220 (Fig. 5) generates a second socket 220e and stores a port number assigned to the socket, namely, a user-device-side second port number (UPN-2), in the memory 220j. The second connection processor 220c reads the user device address information (UADR), the user-device-side second port number (UPN-2), the relay server device address information (ISADR), and the relay server device standby port number (ISPN-0) from the memory 220j and generates second connection establishment request information (for example, a SYN packet) including these pieces of information. The generated second connection establishment request information is sent to the transmitter 220a, and the transmitter 220a sends the information through the network 250 to the relay server device 230.

The second connection establishment request information is received by the receiver 230b of the relay server device 230 (Fig. 6) and is sent through the standby socket 230i to the newly generated second connection processor 230d. The second connection processor 230d first generates the second socket 230k, assigns a relay-server-device-side second port number (ISPN-2) to the socket, and gives a second socket number (SN-2). The second connection processor 230d associates the second socket number (SN-2), the user device address information (UADR), the user-device-side second port number (UPN-2), the relay server device address information (ISADR), and the relay-server-device-side second port number (ISPN-2) with one another and stores them in the memory 230g.

The second connection processor 230d reads the user device address information (UADR), the user-device-side second port number (UPN-2), the relay server device address information (ISADR), and the relay-server-device-side second port number (ISPN-2) from the memory 230g and generates second connection establishment request information including these pieces of information. The second connection processor 230d also generates acknowledgment information and sends the generated second connection establishment request information and acknowledgment information (for example, ACK and SYN packets) to the transmitter 230a. The transmitter 230a sends these pieces of information through the network 250 to the user device 220.

The second connection establishment request information and the acknowledgment information are received by the receiver 220b of the user device 220 (Fig. 5) and are sent through the second socket 220e to the second connection processor 220c. The second connection processor 220c associates the user device address information (UADR), the user-device-side second port number (UPN-2), the relay server device address information (ISADR), and the relay-server-device-side second port number (ISPN-2) with one another and stores them in association with the second socket number (SN-2) corresponding to the second socket 220e, in the memory 220j.

The second connection processor 220c generates acknowledgment information (for example, an ACK packet) and sends it from the transmitter 220a to the relay server device 230. When the acknowledgment information is received by the relay server device 230, a second connection is established between the relay server device 230 and the user device 220 (the description of [Details of step S13] is now completed).

The communication processor 220g of the user device 220 (Fig. 5) reads the user authentication device identifier (AUTID) (corresponding to the identifier of the first terminal), the authentication request information (AUTRQ), the target server device address information (TSADR), and the session information (SID) (corresponding to the transmission information) from the memory 220j and sends these pieces of information to the second socket 220e. The second socket 220e sends second request information (RQ-2) including these pieces of information to the transmitter 220a, and the transmitter 220a sends the second request information (RQ-2) via the second connection to the relay server device 230 (step S14). The sent second request information (RQ-2) is received via the second connection by the receiver 230b of the relay server device 230 (Fig. 6) (step S15). More specifically, the transmitter 220a of the user device 220 (Fig. 5) sends the second request information (RQ-2) having a TCP header which includes the user-device-side second port number (UPN-2) (transmission source port number) and the relay-server-device-side second port number (ISPN-2) (transmission destination port number), corresponding to the second socket number (SN-2) stored in the memory 220j; an IP header which includes the user device address information (UADR) (transmission source address) and the relay server device address information (ISADR) (transmission destination address); and payload information which includes the user authentication device identifier (AUTID), the authentication request information (AUTRQ), the target server device address information (TSADR), and the session information (SID), through the network 250, and the second request information (RQ-2) is received by the receiver 230b of the relay server device 230 (Fig. 6).

The user authentication device identifier (AUTID), the authentication request information (AUTRQ), the target server device address information (TSADR), and the session information (SID), included in the received second request information (RQ-2), are sent through the second socket 230k to the communication processor 230h, and the communication processor 230h stores these pieces of information in the memory 230g.

The communication path endpoint search unit 230f reads the user authentication device identifier (AUTID) included in the second request information (RQ-2) from the memory 230g, searches through the memory 230g for a match with the first socket number (SN-1) (corresponding to the first endpoint information) associated with the same user authentication device identifier (AUTID), and extracts the information (step S16). The extracted first socket number (SN-1) is sent to the communication processor 230h. The first socket number (SN-1) must be extracted by the processing in step S16 because the processing by the relay server device 230 in steps S1 to S4 and the processing by the relay server device 230 in step S13 and thereafter are executed in different threads or processes.

The communication processor 230h of the relay server device 230 reads the authentication request information (AUTRQ), the target server device address information (TSADR), and the session information (SID) from the memory 230g and sends the read information to the first socket 230j corresponding to the first socket number (SN-1) extracted in step S16. The first socket 230j sends the authentication request information (AUTRQ), the target server device address information (TSADR), and the session information (SID) (corresponding to the transmission information) to the transmitter 230a. The transmitter 230a sends the transmission information via the first connection, as response information to the information sent in step S2 (step S17). The transmission information is received by the receiver 210b of the user authentication device 210 (Fig. 4) via the first connection (step S18). More specifically, the transmitter 230a of the relay server device 230 (Fig. 6) sends information having a TCP header which includes the user-authentication-device-side first port number (AUTPN-1) (transmission destination port number) and the relay-server-device-side first port number (ISPN-1) (transmission source port number), corresponding to the first socket number (SN-1) extracted in step S16; an IP header which includes the user authentication device address information (AUTADR) (transmission destination address) and the relay server device address information (ISADR) (transmission source address); and payload information which includes the authentication request information (AUTRQ), the target server device address information (TSADR), and the session information (SID), through the network 250, and the information is received by the receiver 210b of the user authentication device 210 (Fig. 4).

The authentication request information (AUTRQ), the target server device address information (TSADR), and the session information (SID) included in the received information are sent through the first socket 210d to the communication processor 210e. The communication processor 210e sends the authentication request information (AUTRQ) to the authentication processor 210g and stores the target server device address information (TSADR) and the session information (SID) in the memory 210j.

The communication processor 210e, to which the authentication request information (AUTRQ) has been sent, causes the output unit 210i, which is a user interface, to output input directive information (IND) (step S19). The input directive information (IND) is directive information which prompts the user to input authentication information required in user authentication. In the example described in the first embodiment, information prompting the input of a choice as to whether to authenticate the user is output as the input directive information (IND). The input directive information (IND) can be provided in any form, such as an image, video, sound, vibration, etc. For example, an image having a message asking whether to send the result of authentication and a Yes/No choice button, together with an alarm sound, is output as the input directive information (IND).

The user, upon noticing the output input directive information (IND), inputs authentication information (AUT) to the input unit 210h of the user authentication device 210, which is a user interface (step S20). The authentication information (AUT) in the example shown in this embodiment is information indicating the selection as to whether to authenticate the user. For example, if the input directive information (IND) has an image showing a message asking whether to send the authentication result and a Yes/No choice button, together with an alarm sound, the user uses the input unit 210h to select the Yes button or the No button to input the selection information as authentication information (AUT).

The authentication information (AUT) input to the input unit 210h is sent to the authentication processor 210g. On condition that the authentication information (AUT) is the information indicating selection made to authenticate the user, the authentication processor 210g generates authentication result information (AUTRS) (corresponding to reply information) indicating that the user authentication has succeeded and stores the authentication result information (AUTRS) in the memory 210j (step S21). This means that the user is approved as an authorized user because the user is in an environment in which information can be input to the input unit 210h of the user authentication device 210 (the user owns the user authentication device 210, for example). The signature generator 210f reads a first secret key (SK-1) and the authentication result information (AUTRS) from the memory 210j, generates signature information (SIGN) (signature information of the authentication result information (AUTRS)) obtained by encrypting information including the authentication result information (AUTRS) using the first secret key (SK-1) with the public key encryption system, and stores the signature information (SIGN) in the memory 210j (step S22).

The communication processor 210e reads the authentication result information (AUTRS), the signature information (SIGN), the target server device address information (TSADR), and the session information (SID) (corresponding to the reply information) from the memory 210j and sends the reply information to the first socket 210d. The first socket 210d sends the reply information to the transmitter 210a, and the transmitter 210a sends the reply information via the first connection (step S23). The sent reply information is received via the first connection by the receiver 230b of the relay server device 230 (Fig. 6) (step S24). The received authentication result information (AUTRS), the signature information (SIGN), the target server device address information (TSADR), and the session information (SID) are sent through the first socket 230j to the communication processor 230h, and the communication processor 230h stores these pieces of information in the memory 230g.

The communication processor 230h of the relay server device 230 reads the authentication result information (AUTRS), the signature information (SIGN), the target server device address information (TSADR), and the session information (SID) from the memory 230g and sends these pieces of information to the second socket 230k. The communication processor 230h can identify the second socket 230k because the processing by the relay server device 230 in steps S13 to S29 has been executed in the same thread and because the second socket number (SN-2) of the second connection established in step S13 has been stored in the temporary memory 230p during the processing. The second socket 230k sends the authentication result information (AUTRS), the signature information (SIGN), the target server device address information (TSADR), and the session information (SID) (corresponding to the transmission information) to the transmitter 230a. The transmitter 230a sends the transmission information as response information to the information sent in step S14, via the second connection (step S25). The transmission information is received via the second connection by the receiver 220b of the user device 220 (Fig. 5) (step S26). More specifically, the transmitter 230a of the relay server device 230 (Fig. 6) sends information having a TCP header which includes the user-device-side second port number (UPN-2) (transmission destination port number) and the relay-server-device-side second port number (ISPN-2) (transmission source port number), corresponding to the second socket number (SN-2) stored in the memory 230g; an IP header which includes the user device address information (UADR) (transmission destination address) and the relay server device address information (ISADR) (transmission source address); and payload information which includes the authentication result information (AUTRS), the signature information (SIGN), the target server device address information (TSADR), and the session information (SID), via the network 250, and the information is received by the receiver 220b of the user device 220 (Fig. 5). The authentication result information (AUTRS), the signature information (SIGN), the target server device address information (TSADR), and the session information (SID) included in the received information are sent through the second socket 220e to the communication processor 220g, and the communication processor 220g stores these pieces of information in the memory 220j.

The first connection processor 210c of the user authentication device 210 and the first connection processor 230c of the relay server device 230 release the first connection by TCP processing, for example (step S27). This deletes the first socket 210d and the first socket 230j and also deletes the first socket number (SN-1) and the associated information from the memory 210j and the memory 230g. The communication processor 230h of the relay server device 230 disassociates the user authentication device identifier (AUTID) from the first socket number (SN-1), stored in the memory 230g (step S28). The second connection processor 220c of the user device 220 and the second connection processor 230d of the relay server device 230 release the second connection by TCP processing, for example (step S29). This deletes the second socket 220e and the second socket 230k and also deletes the second socket number (SN-2) and the associated information from the memory 220j and the memory 230g.

The communication processor 220g of the user device 220 (Fig. 5) reads the authentication result information (AUTRS), the signature information (SIGN), the target server device address information (TSADR), and the session information (SID) from the memory 220j. The communication processor 220g sends the authentication result information (AUTRS), the signature information (SIGN), and the session information (SID) to the third socket 220f of the third connection corresponding to the target server device address information (TSADR). The third socket 220f sends these pieces of information to the transmitter 220a, and the transmitter 220a sends these pieces of information via the third connection to the target server device 240 (step S30). The communication processor 220g can identify the third socket 220f because the processing by the user device 220 in steps S7 to S30 has been executed in the same thread and because the information of the third connection established in step S7 is stored in the temporary memory 220m during the processing. The sent information is received via the third connection by the receiver 240b of the target server device 240 (Fig. 7) (step S31). The received information is sent through the third socket 240e to the communication processor 240f, and the communication processor 240f stores the authentication result information (AUTRS), the signature information (SIGN), and the session information (SID) in the memory 240i.

The authentication result verifier 240g reads a first public key (PK-1), the authentication result information (AUTRS), and the signature information (SIGN) from the memory 240i, decrypts the signature information (SIGN) by using the first public key (PK-1), and compares the decryption result and the authentication result information (AUTRS). The authentication result verifier 240g verifies the signature information (SIGN) by this comparison, judges the validity of the authentication result information (AUTRS), and outputs the result of judgment (step S32). The result of judgment is input to the permission unit 240h. If the result of judgment indicates that the authentication result information (AUTRS) is invalid (rejection) (step S33), the permission unit 240h rejects the log-in of the user device 220 (step S34).

If the result of judgment indicates that the authentication result information (AUTRS) is valid (acceptance) (step S33), the permission unit 240h permits the log-in of the user device 220 (step S35) and also permits the communication of service information (SERV) between the target server device 240 and the user device 220.

When the service information (SERV) communication is allowed, the communication processor 240f reads service request information (SRQ) associated with the same session information (SID) as that received in step S31 from the memory 240i. Then, the communication processor 240f identifies the service information (SERV) corresponding to a service request identified by the service request information (SRQ). The service information (SERV) is sent through the third socket 240e to the transmitter 240a, and the transmitter 240a sends the identified service information (SERV) as response information to the information sent in step S30, via the third connection to the user device 220 (step S36).

The third connection processor 220d of the user device 220 and the third connection processor 240c of the target server device 240 release the third connection by TCP processing, for example (step S37). This deletes the third socket 220f and the third socket 240e and also deletes the third socket number (SN-3) and the associated information from the memory 220j and the memory 240i.

### [Features of First Embodiment]

In the first embodiment, the relay server device 230 having the connection standby function is provided; the transmission of the first connection establishment request information to the relay server device 230, by the user authentication device 210, causes the first connection to be established between the relay server device 230 and the user authentication device 210; and the relay server device 230 stores the user authentication device identifier (AUTID) and the first socket number (SN-1) corresponding to the first connection in association with each other in the memory 230g. Then, the user device 220 sends the second connection establishment request information to the relay server device 230 at a desired timing. This causes the relay server device 230 and the user device 220 to establish the second connection between the relay server device 230 and the user device 220. This allows the user device 220 to have a communication path to the user authentication device 210 not having the connection standby function (from the user device 220 to the user authentication device 210 through the second connection, the relay server device 230, and the first connection) at a desired timing, so that information can be sent there.

The communication path from the user device 220 to the user authentication device 210 can be established in the same way, so that the user device 220 can send information to the user authentication device 210 not having the connection standby function at a desired timing and can receive the response information. In this type of processing, the user device 220 does not need the connection standby function.

In the first embodiment, the system can be configured such that the interface on the side of the user device 220 conforms to standard specifications (such as OASIS SAML), the specifications of the user authentication device 210 conform to the specifications of the cellular phone, and the relay server device 230 is provided with a function to convert the difference between the specifications (format conversion function).
In the first embodiment, the user can present authentication information (AUT) needed in user authentication processing to the user authentication device 210 without using the network 250. Therefore, the authentication information (AUT) will not be stolen by a third party by eavesdropping on the network 250.
The single sign-on function can be implemented by the user authentication device 210 performing the user authentication processing and the target server device 240 using the result of authentication.

The user authentication device 210 and the user device 220 are provided in different housings. Therefore, the user who owns the user authentication device 210 can use a given device as the user device 220.
In the first embodiment, the validity of the user can be verified by checking whether the user can perceive the input directive information (IND) and can input the authentication information (AUT) through the user interface of the user authentication device 210. Therefore, the validity of the user can be confirmed without performing complicated personal authentication processing using a password or the like.

In step S7c of the first embodiment, the user inputs the user authentication device identifier (AUTID) of the user authentication device 210 directly to the input unit 220h, and in step S8 of the first embodiment, the user authentication device identifier (AUTID) is sent to the target server device 240. However, the system may be configured such that the user authentication device identifier (AUTID) and information identifying it (URL or the like) are stored in association with each other in the memory 210j of the user authentication device 210, and if the user inputs the information identifying the user authentication device identifier (AUTID) to the input unit 220h in step S7c, the user authentication device identifier (AUTID) associated with the input information is sent to the target server device 240 in step S8. In that case, it is preferable that the bit length of the information identifying the user authentication device identifier (AUTID) be shorter than the bit length of the user authentication device identifier (AUTID). Then, both user convenience and security can be provided. As the bit length of the information identifying the user authentication device identifier (AUTID) decreases, the user can handle it more easily, and as the bit length of the user authentication device identifier (AUTID) increases, the degree of security increases. In this modified embodiment, by storing the user authentication device identifier (AUTID) and the information identifying the identifier in association with each other in the user authentication device 210, the two merits can coexist.

### [Second Embodiment]

A second embodiment is a modification of the first embodiment. The second embodiment differs from the first embodiment in the following points: A connection is established, an information request is sent, and when the response information is returned, the connection is released (HTTP, etc.); even in that case, the relay server device stores the session information (SID) and the second socket number (SN-2) in association with each other in the memory, so that the endpoint of the second connection can be detected. The differences from the first embodiment will be mainly described below, and a description of items common to the first embodiment will be omitted.

### [Structure]

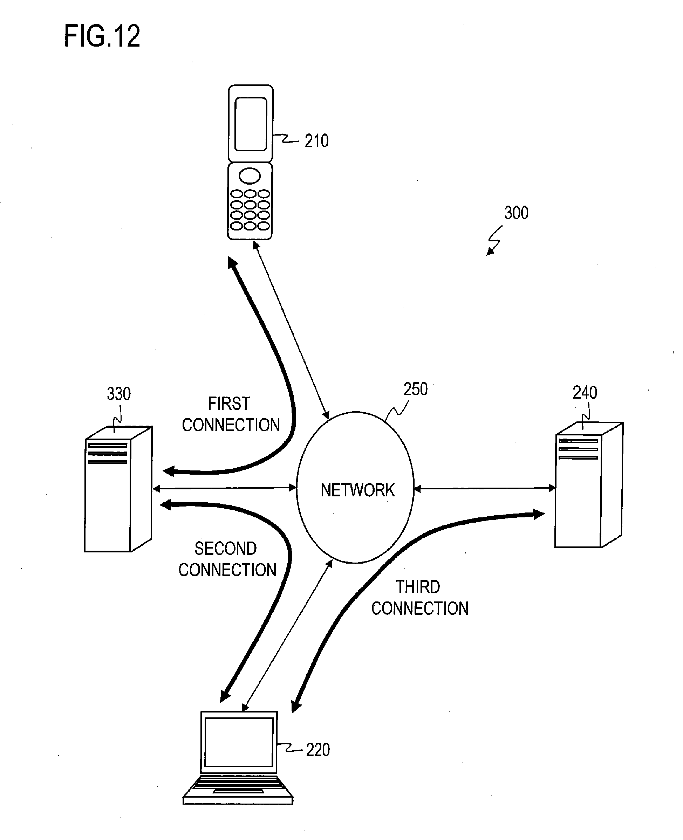

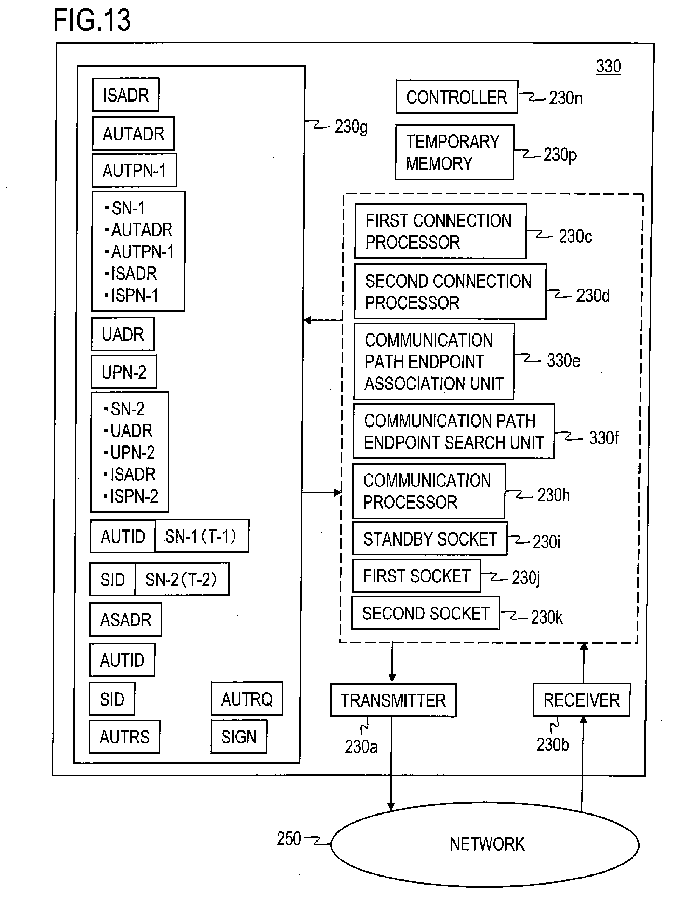

Fig. 12 is a conceptual diagram showing the entire structure of a communication system 300 in the second embodiment. Fig. 13 is a block diagram showing a detailed structure of a relay server device 330 in the second embodiment. In Figs. 12 and 13, elements identical to those in the first embodiment are indicated by the same reference numerals as used in the first embodiment.

As shown in Fig. 12, the communication system 300 in the second embodiment differs from the communication system 200 in the first embodiment in that the relay server device 330 replaces the relay server device 230. As shown in Fig. 13, the relay server device 330 in the second embodiment differs from the relay server device 230 in the first embodiment in the following points: A communication path endpoint association unit 330e replaces the communication path endpoint association unit 230e; and a communication path endpoint search unit 330f replaces the communication path endpoint search unit 230f.

### [Processing]

Processing in the second embodiment will be described next.

### [Preprocessing]

Preprocessing is the same as that in the first embodiment, and a description thereof will be omitted.

### [Communication Processing]

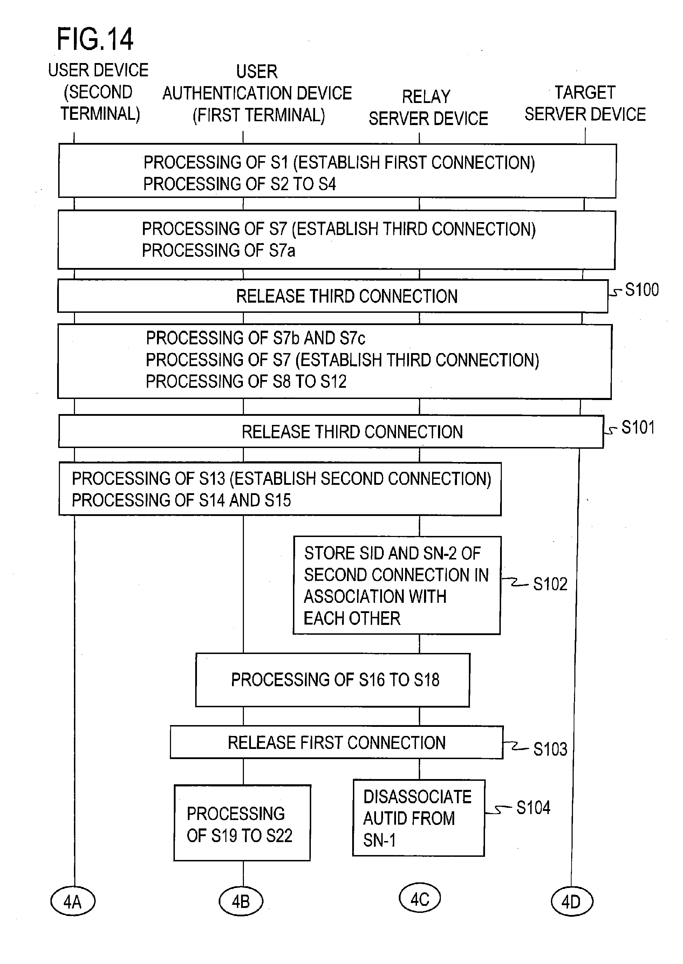

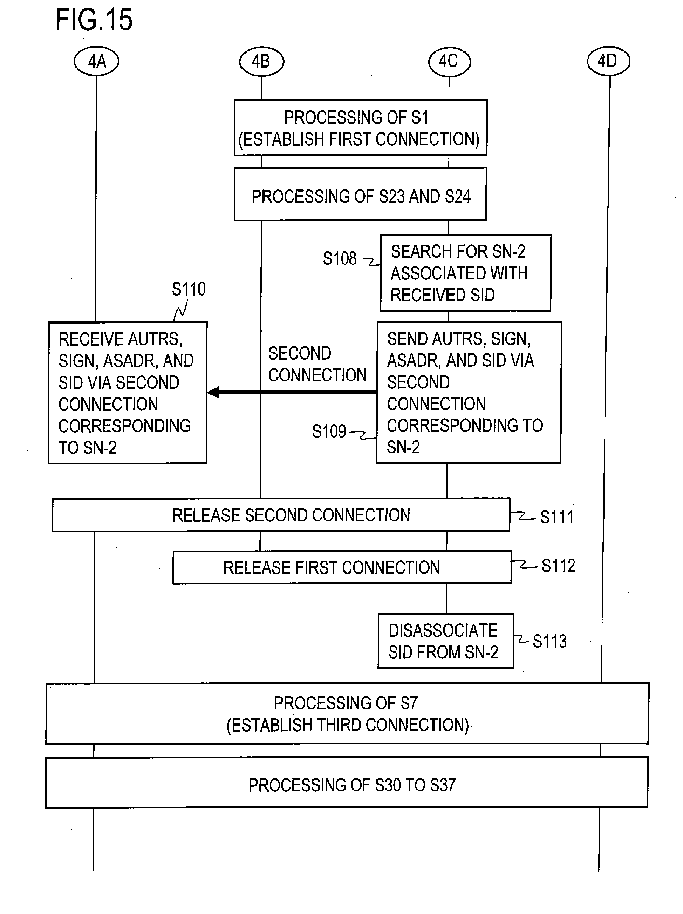

Figs. 14 and 15 are sequence diagrams illustrating communication processing in the second embodiment. With reference to these diagrams, the communication processing in the second embodiment will now be described.

By processing identical to step S1 in the first embodiment, the user authentication device 210 and the relay server device 330 establish a first connection, and processing identical to steps S2 to S4 is executed. Then, the user device 220 and the target server device 240 establish a third connection by processing identical to step S7, and the third connection is released by executing processing identical to step S7a (step S100). This causes processing identical to steps S7b to S7c to be executed, and by the processing identical to step S7, the user device 220 and the target server device 240 establish a third connection, and then processing identical to steps S8 to S12 is executed. Then, the user device 220 and the target server device 240 release the third connection (step S101). By processing identical to step S13 in the first embodiment, the user device 220 and the relay server device 330 establish a second connection, and processing identical to steps S14 and S15 is executed.

The communication path endpoint association unit 330e of the relay server device 330 stores the session information (SID) included in the second request information (RQ-2) received in step S15 and the second socket number (SN-2) (corresponding to the second endpoint information) of the second socket 230k corresponding to the second connection in association with each other in the memory 230g (step S102).

Processing identical to steps S16 to S18 in the first embodiment is executed, and then the user authentication device 210 and the relay server device 330 release the first connection (step S103). The communication processor 230h of the relay server device 330 disassociates the user authentication device identifier (AUTID) from the first socket number (SN-1), stored in the memory 230g (step S104). The user authentication device 210 then executes processing identical to steps S19 to S22 in the first embodiment.

By the processing identical to step S1 in the first embodiment, the user authentication device 210 and the relay server device 330 establish a first connection, and processing identical to steps S23 and S24 is executed.

The communication path endpoint search unit 330f of the relay server device 330 searches through the memory 230g for a match with the session information (SID) included in the reply information (the authentication result information (AUTRS), the signature information (SIGN), the target server device address information, and the session information (SID)) and extracts the second socket number (SN-2) (corresponding to the second endpoint information) associated with the same session information (SID) as that included in the reply information (step S108). The second socket number (SN-2) associated with the session information (SID) must be extracted in the processing in step S108 because the processing of the relay server device 230 in step S13, where the second connection is established, and the processing in step S109 and thereafter that use the second connection are executed in different threads or processes.

The communication processor 230h of the relay server device 330 reads the reply information from the memory 230g and sends the read information to the second socket 230k corresponding to the second socket number (SN-2) extracted in step S108. The second socket 230k sends the reply information to the transmitter 230a, and the transmitter 230a sends the reply information as response information to the information sent in step S 14, via the second connection (step S109). The reply information is received via the second connection by the receiver 220b of the user device 220 (step S110).

The user device 220 and the relay server device 330 release the second connection (step S111), the user authentication device 210 and the relay server device 330 release the first connection (step S112), and the communication processor 230h of the relay server device 330 disassociates the session information (SID) from the second socket number (SN-2), stored in the memory 230g (step S113).
By the processing identical to step S7 in the first embodiment, the user device 220 and the target server device 240 establish a third connection, and processing identical to steps S30 to S37 is executed.

### [Features of Second Embodiment]

In the second embodiment, the communication processing is performed in accordance with a protocol such as HTTP or HTTPS, where a connection is established, an information request is sent, and when the response information is returned, the connection is released. In the processing, the thread (or process) in which the relay server device 330 and the user device 220 establish the second connection in step S 13 differs from the thread (or process) in which the relay server device 330 and the user authentication device 210 establish and execute the first connection in a second round in step S109. Normally, the relay server device 330 cannot know the second socket number (SN-2) corresponding to the second connection established in a different thread (or process) in the processing of step S109.

In the second embodiment, however, the relay server device 330 stores the session information (SID) and the second socket number (SN-2) of the second connection in association with each other in the memory 230g (step S102), and before step S109 is executed, the memory 230g is searched for the session information (SID) included in the reply information, and the second socket number (SN-2) associated with the same session information (SID) as that included in the reply information is extracted (step S108). Accordingly, in the processing in step S109, the relay server device 330 can know the second socket number (SN-2) corresponding to the second connection established in another thread (or process) and can send the response information to the user device 220 via the second connection.

The other features are the same as those of the first embodiment.

### [Third Embodiment]

A third embodiment is an embodiment applying the second aspect to a single sign-on system. The third embodiment will now be described.

### [Structure]

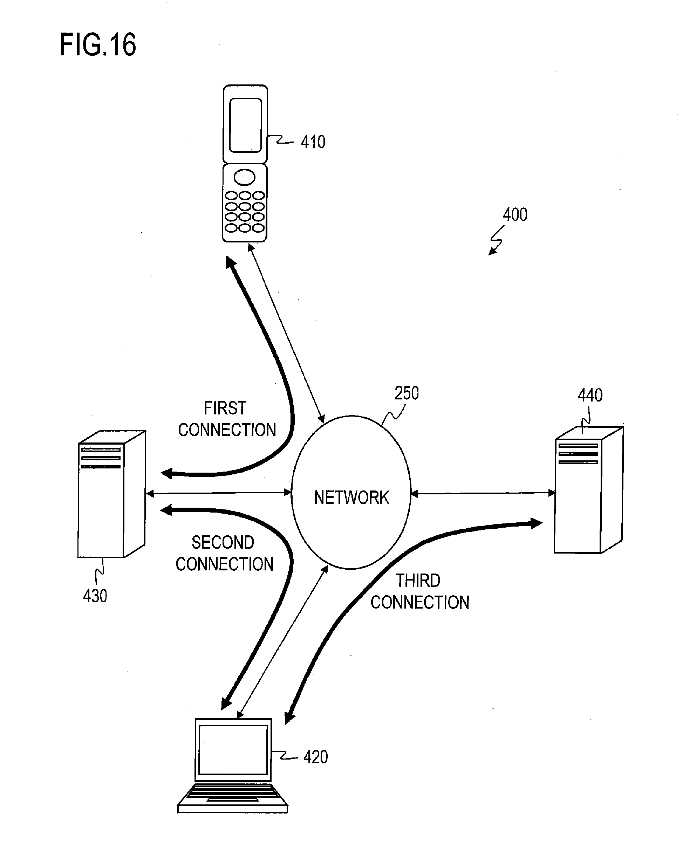

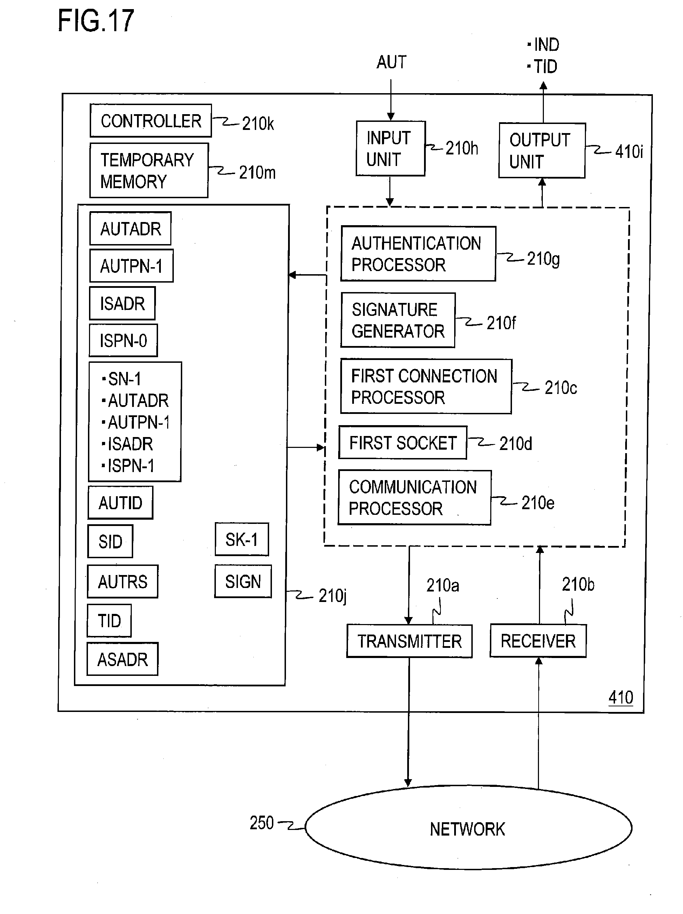

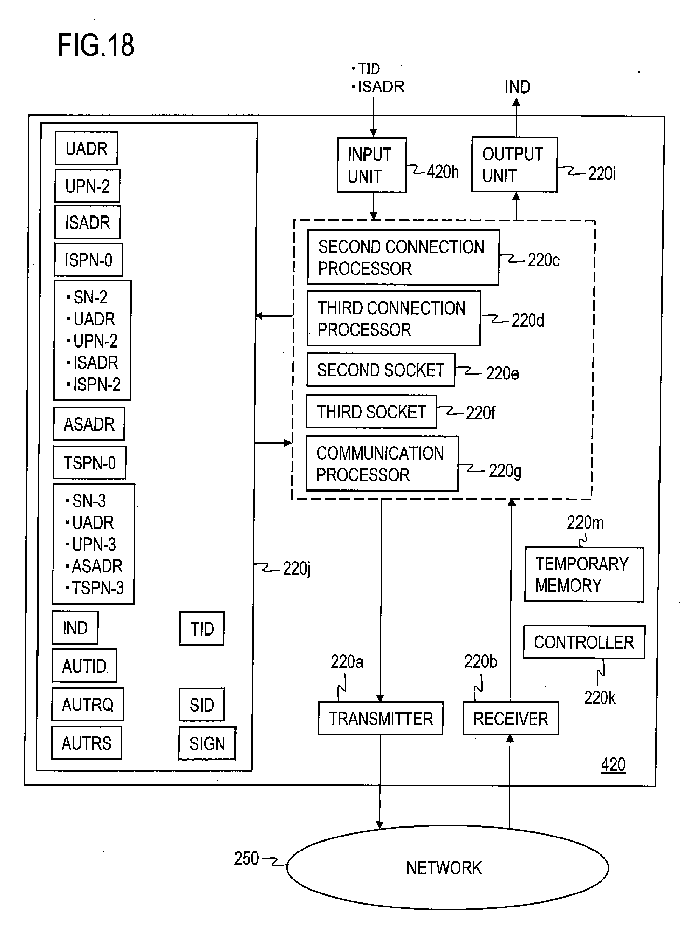

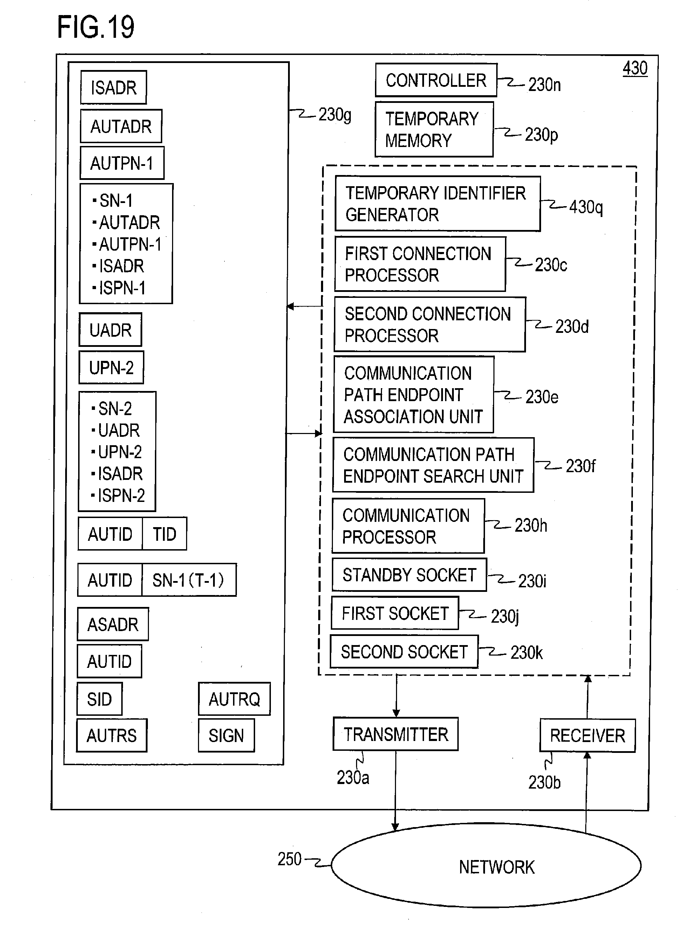

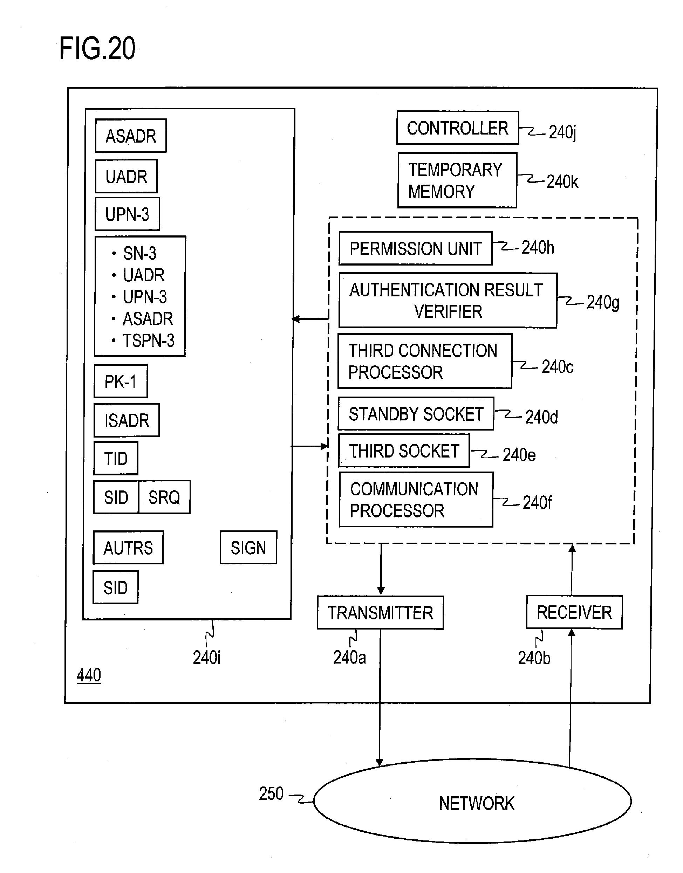

Fig. 16 is a conceptual diagram showing the entire structure of a communication system 400 in the third embodiment. Fig. 17 is a block diagram showing a detailed structure of a user authentication device 410 (corresponding to the first terminal) in the third embodiment. Fig. 18 is a block diagram showing a detailed structure of a user device 420 (corresponding to the second terminal) in the third embodiment. Fig. 19 is a block diagram showing a detailed structure of a relay server device 430 in the third embodiment. Fig. 20 is a block diagram showing a detailed structure of a target server device 440 in the third embodiment.

As shown in Fig. 16, the communication system 400 in the third embodiment includes the user authentication device 410, the user device 420, the relay server device 430, and the target server device 440, which are configured to allow communication through a network 250. Although Fig. 16 shows one instance of each of the user authentication device 410, the user device 420, the relay server device 430, and the target server device 440, two or more instances of at least one of the user authentication device 410, the user device 420, the relay server device 430, and the target server device 440 may be provided.

As shown in Fig. 17, the user authentication device 410 in the third embodiment differs from the user authentication device 210 in the first embodiment in that an output unit 410i replaces the output unit 210i. As shown in Fig. 18, the user device 420 in the third embodiment differs from the user device 220 in the first embodiment in that an input unit 420h replaces the input unit 220h. As shown in Fig. 19, the relay server device 430 in the third embodiment differs from the relay server device 230 in the first embodiment in that a temporary identifier generator 430q is further provided. The target server device 440 in the third embodiment has the same structure as the target server device 240 in the first embodiment but differs just in that a temporary identifier is handled.

### [Preprocessing]

Preprocessing is the same as that in the first embodiment, and a description thereof will be omitted.

### [Communication Processing]

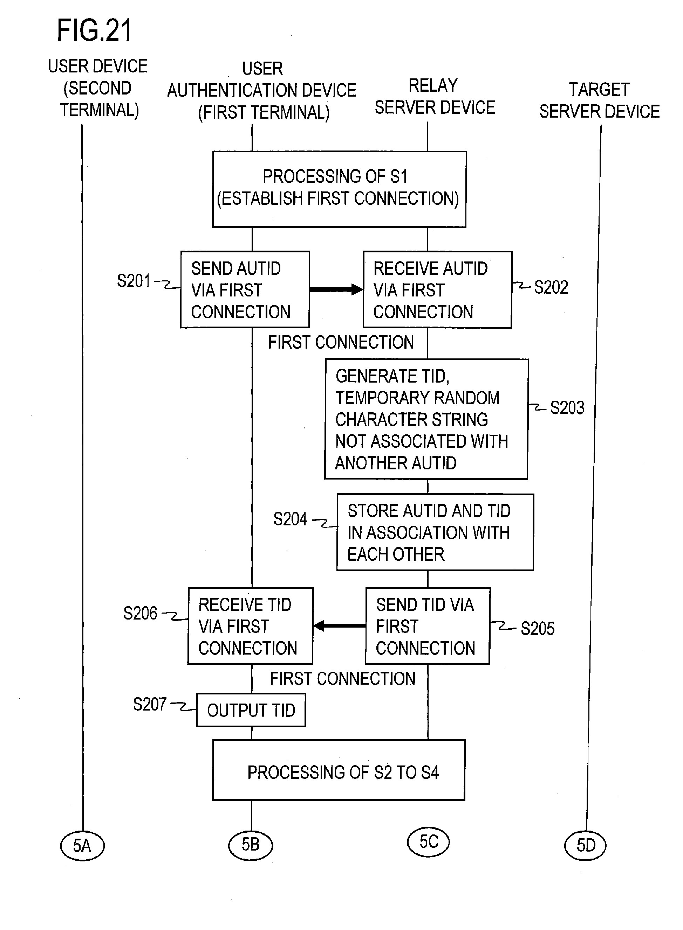

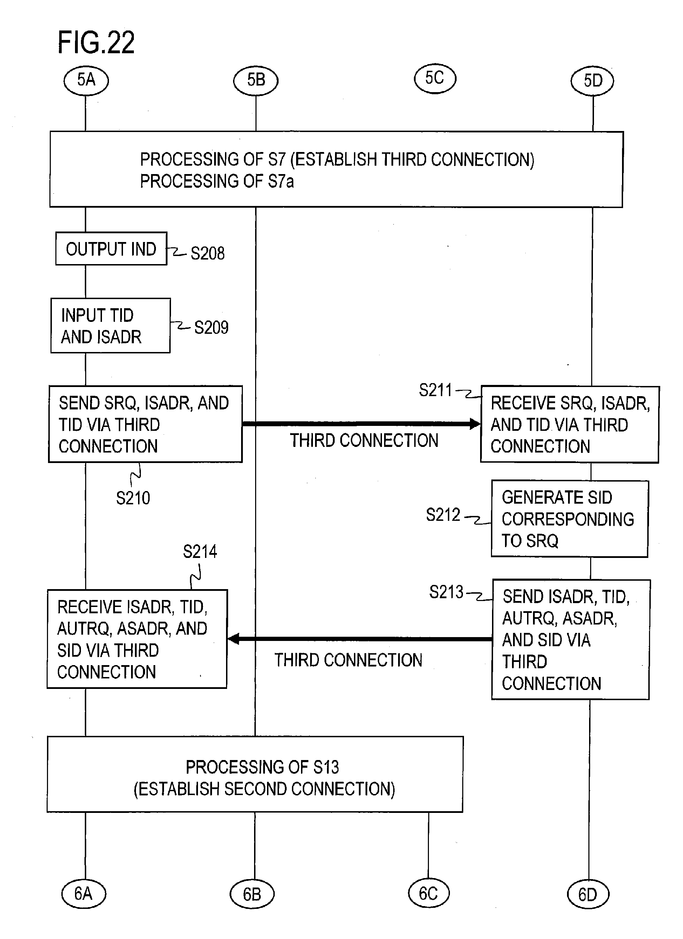

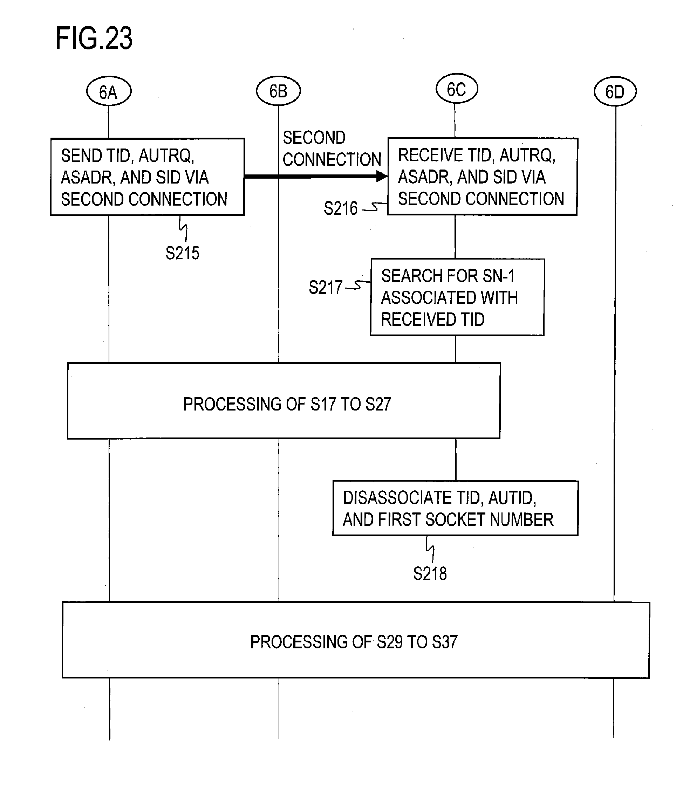

Figs. 21 to 23 are sequence diagrams illustrating communication processing in the third embodiment. With reference to these diagrams, the communication processing in the third embodiment will now be described.

By processing identical to step S1 in the first embodiment, the user authentication device 410 and the relay server device 430 establish a first connection. After the first connection is established, the communication processor 210e of the user authentication device 410 (Fig. 17) reads the identifier of the user authentication device 210, namely, the user authentication device identifier (AUTID), from the memory 210j, and sends the identifier to the first socket 210d. The first socket 210d sends the user authentication device identifier (AUTID) to the transmitter 210a, and the transmitter 210a sends first request information (RQ-1) including the user authentication device identifier (AUTID) via the first connection (step S201). The sent first request information (RQ-1) is received via the first connection by the receiver 230b of the relay server device 430 (Fig. 19) (step S202). The user authentication device identifier (AUTID) included in the first request information (RQ-1) is sent through the first socket 230j to the communication processor 230h, and the communication processor 230h stores the user authentication device identifier (AUTID) in the memory 230g. This causes the temporary identifier generator 430q to generate a temporary identifier formed of a random character string not associated with another user authentication device identifier (AUTID) (step S203) and to store the temporary identifier in association with the user authentication device identifier (AUTID) in the memory 230g (step S204). The communication processor 230h sends the temporary identifier generated in step S204 to the first socket 230j. The first socket 230j sends the temporary identifier as response information to the first request information (RQ-1) sent in step S201, via the first connection (step S205). The sent temporary identifier is received via the first connection by the receiver 210b of the user authentication device 410 (Fig. 17) (step S206). The received temporary identifier (TID) is sent through the first socket 210d to the communication processor 210e, and the communication processor 210e stores it in the memory 210j. The temporary identifier (TID) is further sent to the output unit 410i, and the output unit 410i outputs it (step S207). Then, processing identical to steps S2 to S4 in the first embodiment is executed, and the user authentication device identifier (AUTID) and a first socket number (SN-1) (first contact point information) are stored in association with each other in the memory 230g.

By processing identical to step S7 in the first embodiment, the user device 420 and the target server device 440 establish a third connection, and processing identical to step S7a is executed. Then, the output unit 220i of the user device 420 (Fig. 18) outputs input directive information (IND) which prompts the input of the temporary identifier (TID) and the relay server device address information (ISADR) (step S208). The user inputs the temporary identifier (TID) output from the user device 420 (step S207) and the relay server device address information (ISADR) of the relay server device 430 to the input unit 420h, and the communication processor 220g stores them in the memory 220j (step S209).

The communication processor 220g of the user device 420 (Fig. 18) reads the relay server device address information (ISADR) and the temporary identifier (TID) from the memory 220j and sends them together with service request information (SRQ) to the third socket 220f. The third socket 220f sends these pieces of information to the transmitter 220a, and the transmitter 220a sends them via the third connection to the target server device 440 (step S210). The sent information is received via the third connection by the receiver 240b of the target server device 440 (Fig. 20) (step S211).

The relay server device address information (ISADR), the temporary identifier (TID), and the service request information (SRQ) included in the received information are sent through the third socket 240e to the communication processor 240f. The communication processor 240f stores the relay server device address information (ISADR) and the temporary identifier (TID) in the memory 240i, generates session information (SID) corresponding to the service request information (SRQ), and stores the service request information (SRQ) and the session information (SID) in association with each other in the memory 240i (step S212).

The communication processor 240f reads the relay server device address information (ISADR), the temporary identifier (TID), the target server device address information (TSADR), and the session information (SID) from the memory 240i and sends them together with authentication request information (AUTRQ) to the third socket 240e. The third socket 240e sends these pieces of information to the transmitter 240a. The transmitter 240a sends these pieces of information as response information to the information sent in step S210, via the third connection to the user device 420 (Fig. 18) (step S213). The sent information is received via the third connection by the receiver 220b of the user device 420 (step S214). The relay server device address information (ISADR), the temporary identifier (TID), the target server device address information (TSADR), the session information (SID), and the authentication request information (AUTRQ) included in the received information are sent through the third socket 220f to the communication processor 220g and are then stored in the memory 220j.

By processing identical to step S13 in the first embodiment, the user device 420 and the relay server device 430 establish a second connection.
The communication processor 220g of the user device 420 (Fig. 18) reads the temporary identifier (TID), the authentication request information (AUTRQ), the target server device address information (TSADR), and the session information (SID) (corresponding to the transmission information) from the memory 220j and sends the read information to the second socket 220e. The second socket 220e sends second request information (RQ-2) including the sent information to the transmitter 220a, and the transmitter 220a sends the second request information (RQ-2) via the second connection to the relay server device 430 (step S215). The sent second request information (RQ-2) is received via the second connection by the receiver 230b of the relay server device 430 (Fig. 19) (step S216). The communication path endpoint search unit 230f reads the temporary identifier (TID) included in the second request information (RQ-2) from the memory 230g. The communication path endpoint search unit 230f extracts the user authentication device identifier (AUTID) associated with the same temporary identifier (TID) from the memory 230g and also extracts the first socket number (SN-1) (corresponding to the first endpoint information) associated with the user authentication device identifier (AUTID) from the memory 230g (step S217). The extracted first socket number (SN-1) is sent to the communication processor 230h.

Processing identical to steps S17 to S27 in the first embodiment is executed, and the communication processor 230h of the relay server device 430 disassociates the temporary identifier (TID), the user authentication device identifier (AUTID), and the first socket number (SN-1), stored in the memory 230g (step S218). Then, processing identical to steps S29 to S37 in the first embodiment is executed.

### [Features of Third Embodiment]

In the third embodiment, the temporarily generated temporary identifier (TID) and the first socket number (SN-1) are stored in association with each other in the relay server device 430, so that the endpoint of the first connection can be detected. Instead of the user authentication device identifier (AUTID), the temporary identifier (TID) is sent to the target server device 440. This improves the degree of security, in comparison with the method of sending the user authentication device identifier (AUTID) to the target server device 440. The other features are the same as those in the first embodiment.

### [Fourth Embodiment]

A fourth embodiment is a modification of the third embodiment. The fourth embodiment differs from the third embodiment in the following points: A connection is established, an information request is sent, and when the response information is returned, the connection is released (HTTP, etc.); even in that case, the relay server device stores the session information (SID) and the second socket number (SN-2) in association with each other in the memory, so that the endpoint of the second connection can be detected.

### [Structure]

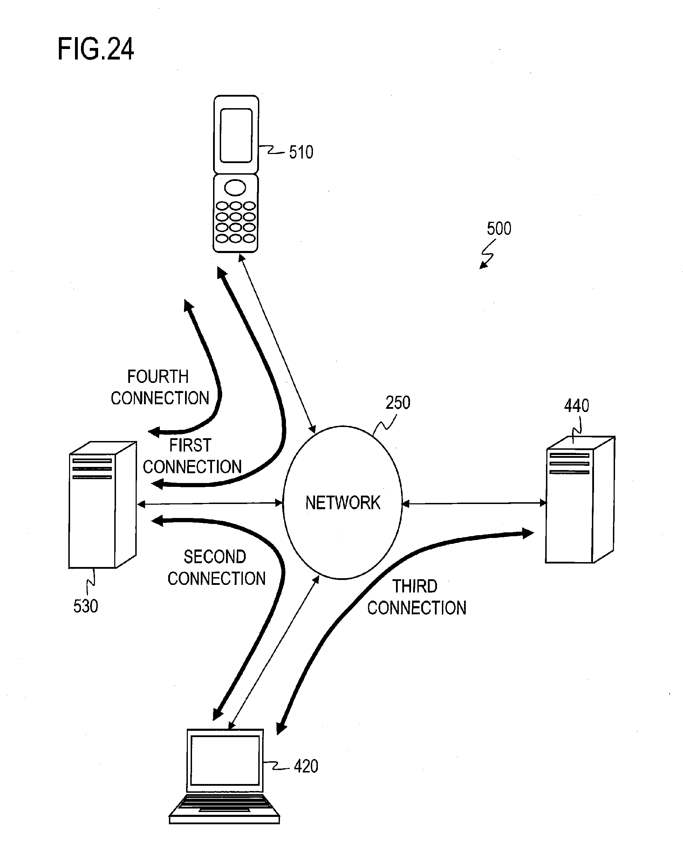

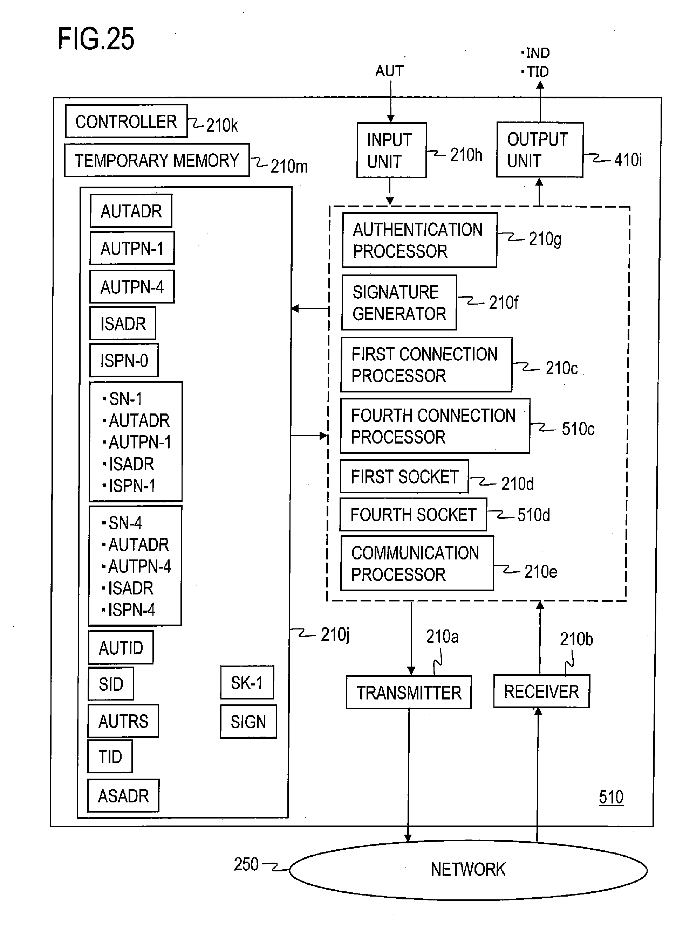

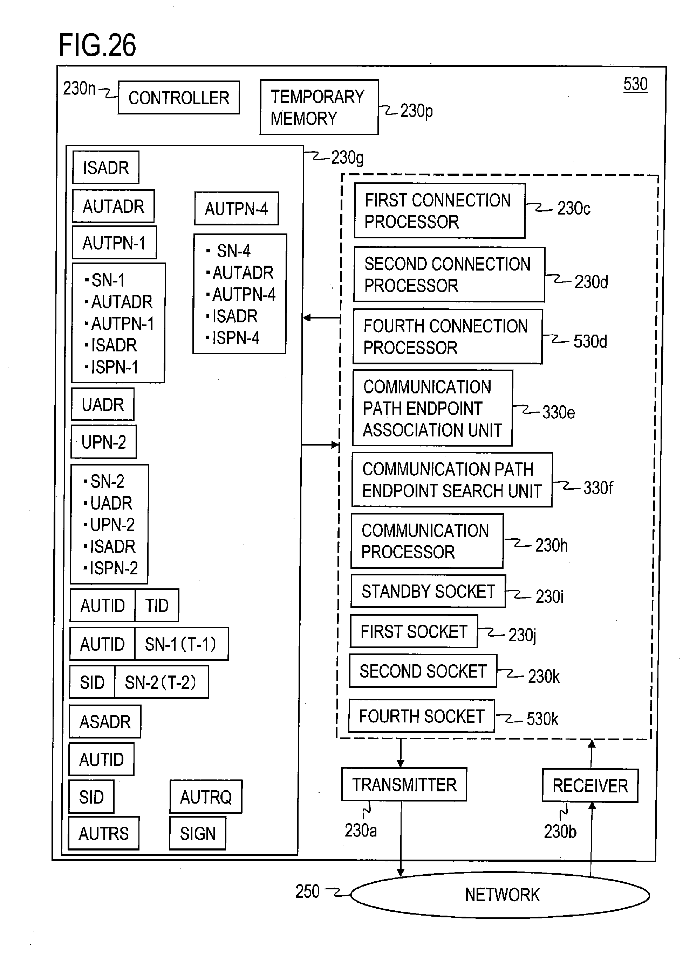

Fig. 24 is a conceptual diagram showing the entire structure of a communication system 500 in the fourth embodiment. Fig. 25 is a block diagram showing a detailed structure of a user authentication device 510 (first terminal) in the fourth embodiment. Fig. 26 is a block diagram showing a detailed structure of a relay server device 530. In Figs. 24 to 26, elements identical to those in the embodiments described above are indicated by the same reference numerals as used in those embodiments.

As shown in Fig. 24, the communication system 500 in the fourth embodiment differs from the communication system 400 in the third embodiment in the following points: The user authentication device 510 replaces the user authentication device 410, and the relay server device 530 replaces the relay server device 430. As shown in Fig. 25, the user authentication device 510 in the fourth embodiment differs from the user authentication device 410 in the third embodiment in that the user authentication device 510 further includes a fourth connection processor 510c and a fourth socket 510d. The fourth socket 510d is generated by the fourth connection processor 510c when a connection is established. As shown in Fig. 26, the relay server device 530 in the fourth embodiment differs from the relay server device 430 in the third embodiment in that the relay server device 530 further includes a fourth connection processor 530d and a fourth socket 530k. The fourth socket 530k is generated by the fourth connection processor 530d when the connection is established.

### [Processing]

Processing in the fourth embodiment will be described next.

### [Preprocessing]

Preprocessing is the same as that in the first embodiment, and a description thereof will be omitted.

### [Communication Processing]

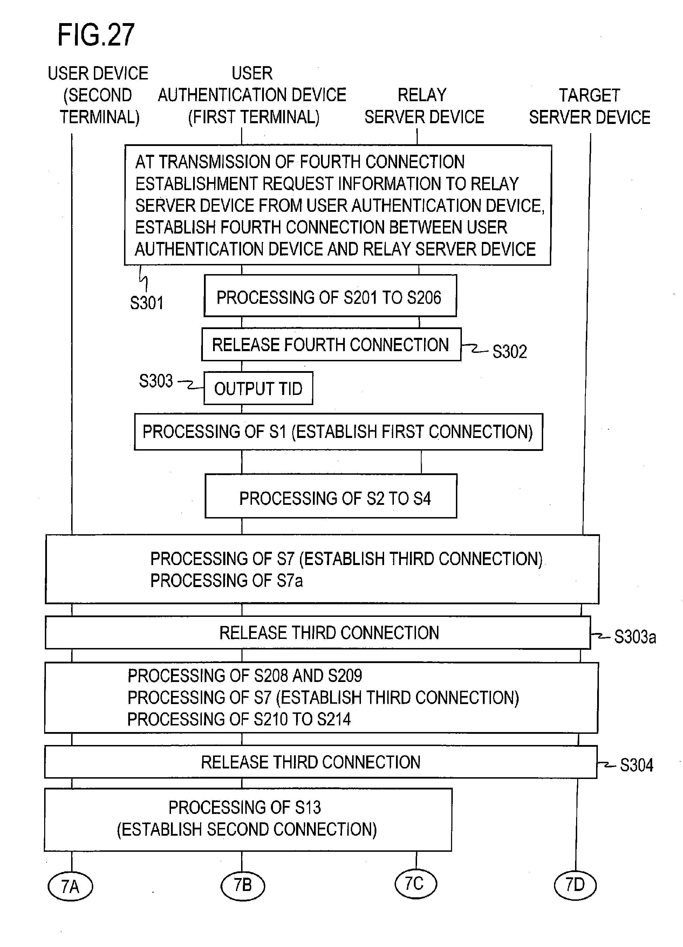

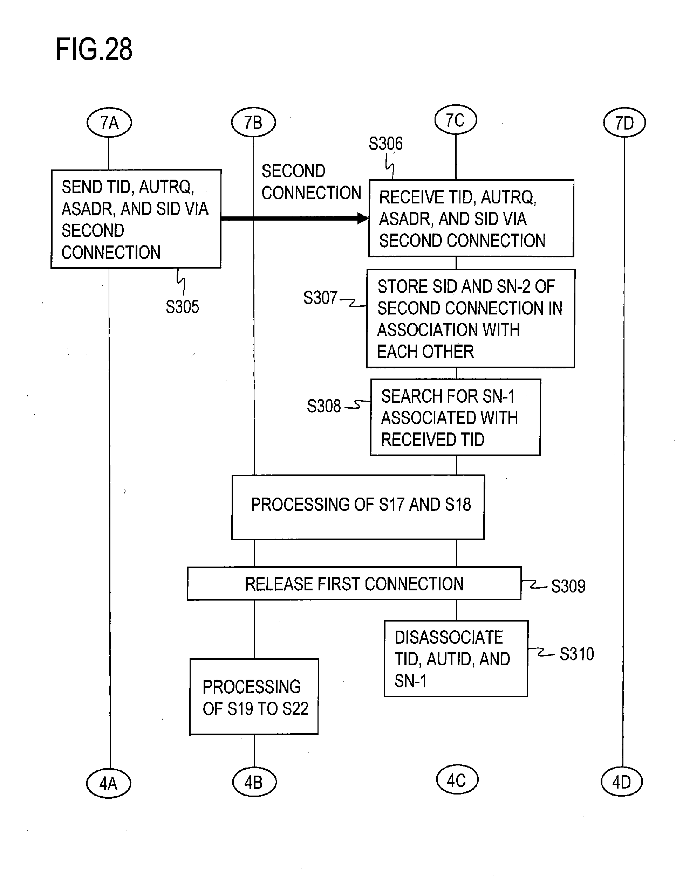

Figs. 27 and 28 are sequence diagrams illustrating communication processing in the fourth embodiment. With reference to these diagrams, the communication processing in the fourth embodiment will now be described.
Startup of the user authentication device 510 (Fig. 25) or the like causes the transmitter 210a of the user authentication device 510 to send fourth connection establishment request information to the relay server device 530, which is in the standby state. This causes the fourth connection processor 530d of the relay server device 530 and the fourth connection processor 510c of the user authentication device 510 to establish a fourth connection between the relay server device 530 and the user authentication device 510 (step S301).

The processing in step S301 is performed in the same way as in step S1 in the first embodiment, for example. This generates the fourth socket 510d in the user authentication device 510 (Fig. 25) and the fourth socket 530k in the relay server device 530 (Fig. 26). In the memory 210j of the user authentication device 510, a fourth socket number (SN-4) corresponding to the fourth socket 510d, user authentication device address information (AUTADR), a user-authentication-device-side fourth port number (AUTPN-4), relay server device address information (ISADR), and a relay-server-device-side fourth port number (ISPN-4) are stored in association with one another. In the memory 230g of the relay server device 530, a fourth socket number (SN-4) corresponding to the fourth socket 530k, the user authentication device address information (AUTADR), the user-authentication-device-side fourth port number (AUTPN-4), the relay server device address information (ISADR), and the relay-server-device-side fourth port number (ISPN-4) are stored in association with one another.

Processing identical to steps S201 to S206 in the third embodiment is executed via the established fourth connection, and then the fourth connection between the relay server device 530 and the user authentication device 510 is released.

By this processing, the temporary identifier (TID) received by the receiver 210b of the user authentication device 510 is sent through the fourth socket 510d to the communication processor 210e, and the communication processor 210e stores the temporary identifier in the memory 210j. The temporary identifier (TID) is further sent to the output unit 410i, and the output unit 410i outputs it (step S303). Then, by the processing identical to step S1 in the first embodiment, the relay server device 530 and the user authentication device 510 establish a first connection, and processing identical to steps S2 to S4 in the first embodiment is executed. This causes the user authentication device identifier (AUTID) and a first socket number (SN-1) (first contact point information) to be stored in association with each other in the memory 230g of the relay server device 530.

By processing identical to step S7 in the first embodiment, the user device 420 and the target server device 440 establish a third connection, and after processing identical to step S7a is executed, the third connection is released (step S303a). Then, processing identical to steps S208 and S209 in the third embodiment is executed, and by the processing identical to step S7 in the first embodiment, the user device 420 and the target server device 440 establish a third connection. After processing identical to steps S210 to S214 in the third embodiment is executed, the third connection is released (step S304).

By processing identical to step S13 in the first embodiment, the user device 420 and the relay server device 430 establish a second connection.

The communication processor 220g of the user device 420 (Fig. 18) reads the temporary identifier (TID), the authentication request information (AUTRQ), the target server device address information (TSADR), and the session information (SID) (corresponding to the transmission information) from the memory 220j and sends these pieces of information to the second socket 220e. The second socket 220e sends second request information (RQ-2) including the sent information to the transmitter 220a, and the transmitter 220a sends the second request information (RQ-2) via the second connection to the relay server device 430 (step S305). The sent second request information (RQ-2) is received via the second connection by the receiver 230b of the relay server device 530 (Fig. 26) (step S306).

The communication path endpoint association unit 330e of the relay server device 530 stores the session information (SID) included in the second request information (RQ-2) received in step S306 and the second socket number (SN-2) (corresponding to the second endpoint information) of the second socket 230k corresponding to the second connection in association with each other in the memory 230g (step S307).

The communication path endpoint search unit 230f reads the temporary identifier (TID) included in the second request information (RQ-2) from the memory 230g. The communication path endpoint search unit 230f extracts the user authentication device identifier (AUTID) associated with the same temporary identifier (TID) from the memory 230g and also extracts a first socket number (SN-1) (corresponding to the first endpoint information) associated with the user authentication device identifier (AUTID), from the memory 230g (step S308). The extracted first socket number (SN-1) is sent to the communication processor 230h.

After processing identical to steps S17 and S18 in the first embodiment is executed, the first connection is released. Then, the communication processor 230h of the relay server device 530 disassociates the temporary identifier (TID), the user authentication device identifier (AUTID), and the first socket number (SN-1), stored in the memory 230g (step S310).

Processing identical to steps S19 to S22 in the first embodiment is executed. Then (Fig. 15), by the processing identical to step S1 in the first embodiment, the user authentication device 510 and the relay server device 530 establish a first connection, and processing identical to steps S23 and S24 is executed.

The communication path endpoint search unit 330f of the relay server device 530 searches through the memory 530g for a match with the session information (SID) included in the reply information (the authentication result information, the signature information, the target server device address information, and the session information) and extracts the second socket number (SN-2) (corresponding to the second endpoint information) associated with the same session information (SID) as included in the reply information (step S108).

The communication processor 230h of the relay server device 530 reads the reply information from the memory 230g and sends the read information to the second socket 230k corresponding to the second socket number (SN-2) extracted in step S108. The second socket 230k sends the reply information to the transmitter 230a, and the transmitter 230a sends the reply information as response information to the information sent in step S 14, via the second connection (step S109). The reply information is received via the second connection by the receiver 220b of the user device 420 (step S110).

The user device 420 and the relay server device 530 release the second connection (step S111), the user authentication device 510 and the relay server device 530 release the first connection (step S112), and the communication processor 230h of the relay server device 530 disassociates the session information (SID) from the second socket number (SN-2), stored in the memory 230g (step S113).

By the processing identical to step S7 in the first embodiment, the user device 420 and the target server device 440 establish a third connection, and processing identical to steps S30 to S37 is executed.

### [Features of Fourth Embodiment]

In the fourth embodiment again, the temporarily generated temporary identifier (TID) is stored in association with the first socket number (SN-1) in the relay server device 530, so that the endpoint of the first connection can be detected. Instead of the user authentication device identifier (AUTID), the temporary identifier (TID) is sent to the target server device 440. This improves the degree of security in comparison with the method of sending the user authentication device identifier (AUTID) to the target server device 440.

In the fourth embodiment, the communication processing is performed in accordance with a protocol such as HTTP or HTTPS, where a connection is established, an information request is sent, and when the response information is returned, the connection is released. In the processing, the thread (or process) in which the relay server device 530 and the user device 420 establish the second connection in step S 13 differs from the thread (or process) in which the relay server device 530 and the user authentication device 510 establish and execute the first connection in a second round in step S109. Normally, the relay server device 530 cannot know the second socket number (SN-2) corresponding to the second connection established in a different thread (or process) in the processing of step S109.

In the fourth embodiment, however, the relay server device 530 stores the session information (SID) and the second socket number (SN-2) of the second connection in association with each other in the memory 230g (step S307), and before step S109 is executed, the memory 230g is searched for a match with the session information (SID) included in the reply information, and the second socket number (SN-2) associated with the same session information (SID) as that included in the reply information is extracted (step S108). Accordingly, in the processing of step S109, the relay server device 530 can know the second socket number (SN-2) corresponding to the second connection established in another thread (or process) and can send the response information to the user device 220 via the second connection. The other features are the same as those in the first embodiment.

### [Fifth Embodiment]

A fifth embodiment is a modification of the embodiments described earlier. The fifth embodiment differs from the embodiments described earlier in the following points: The relay server device generates the sign information (SIGN) of the authentication result information (AUTRS) by using a first secret key (SK-1) of the user authentication device (corresponding to the first terminal); the target server device verifies a public key certificate (CER) by using a second public key (PK-2); and the target server device verifies the signature information (SIGN) by using the first public key (PK-1) included in the public key certificate (CER). This modification can be made to any of the first to fourth embodiments. For simplification of description, an example where this modification is made to the first embodiment will now be described. Its differences from the first embodiment will be described mainly, and a description of items common to the first embodiment will be omitted.

### [Structure]

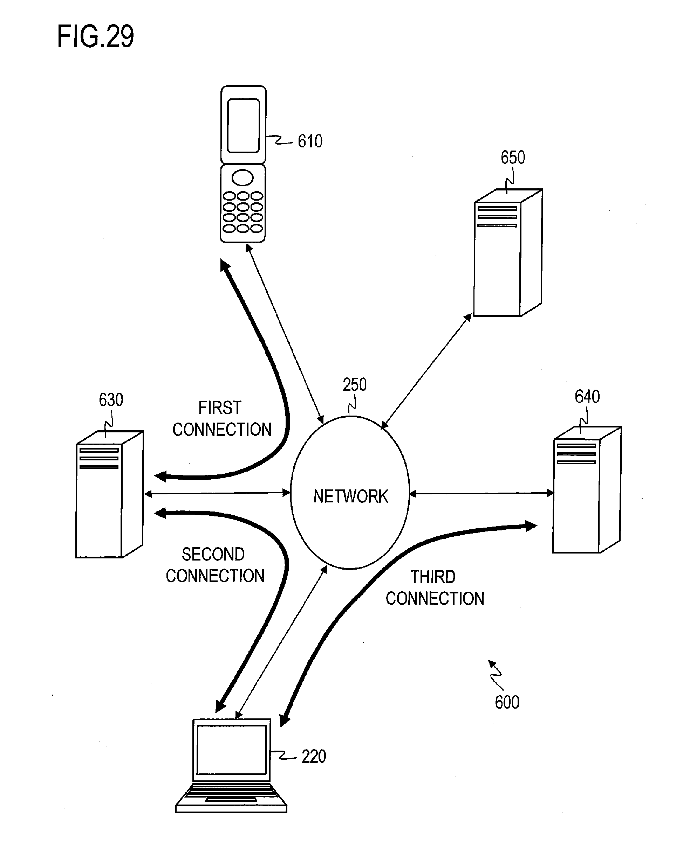

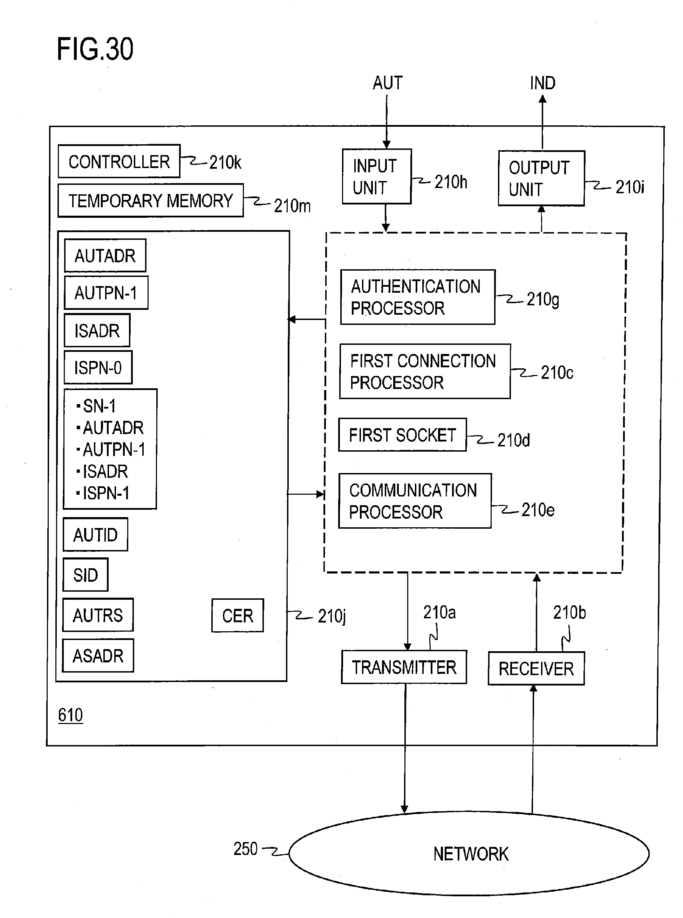

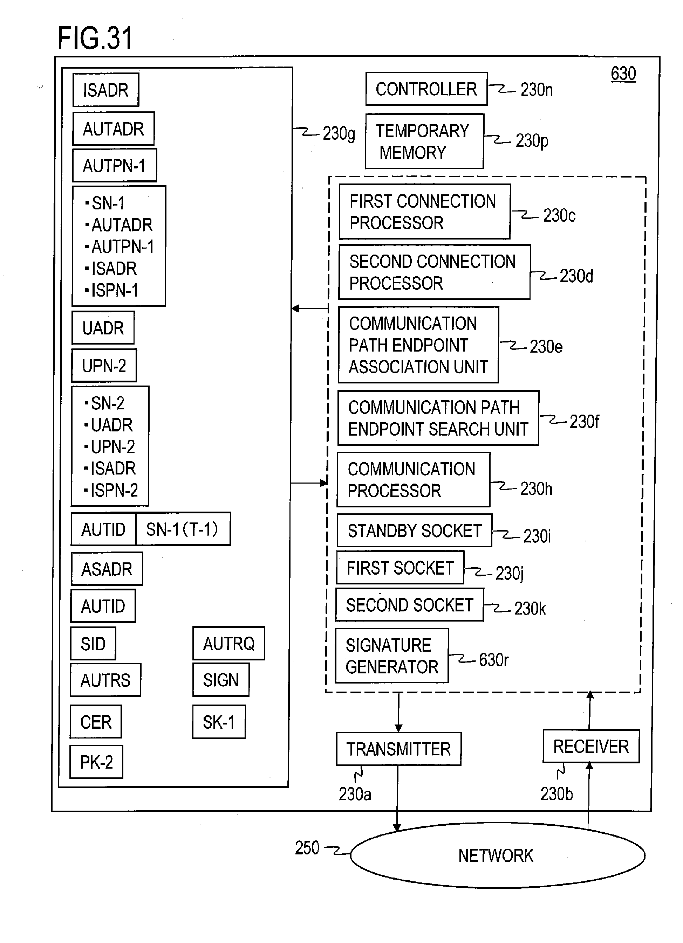

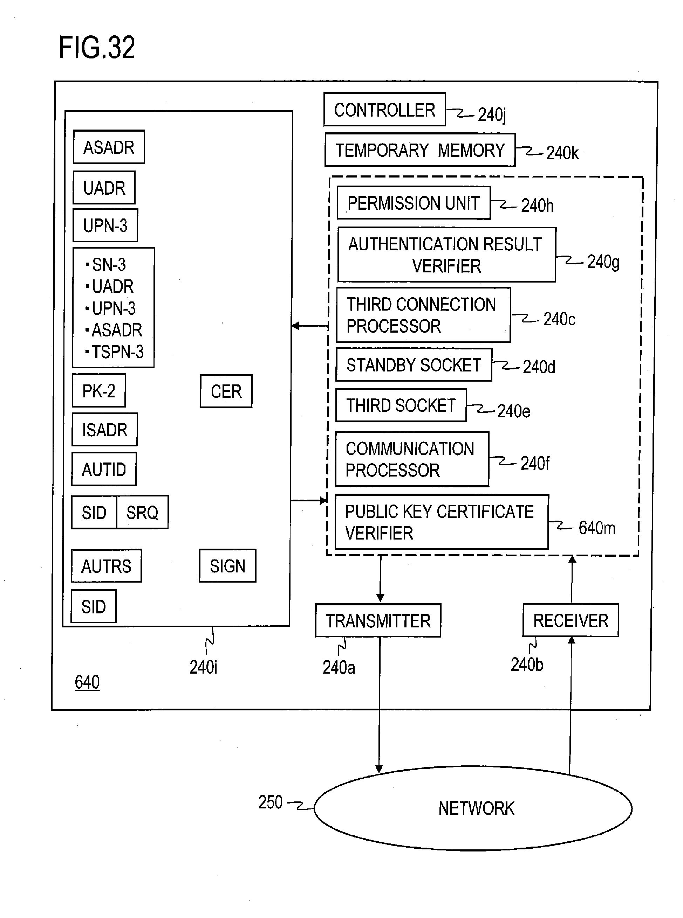

Fig. 29 is a conceptual diagram showing the entire structure of a communication system 600 in the fifth embodiment. Fig. 30 is a block diagram showing a detailed structure of a user authentication device 610 in the fifth embodiment. Fig. 31 is a block diagram showing a detailed structure of a relay server device 630 in the fifth embodiment. Fig. 32 is a block diagram showing a detailed structure of a target server device 640 in the fifth embodiment. In Figs. 29 to 32, elements identical to those in the first embodiment are indicated by the same reference numerals as used in the first embodiment.

As shown in Fig. 29, the communication system 600 in the fifth embodiment differs from the communication system 200 in the first embodiment in the following points: A certificate issuing server device 650 is further included; the user authentication device 610 replaces the user authentication device 210; the relay server device 630 replaces the relay server device 230; and the target server device 640 replaces the target server device 240. As shown in Fig. 30, the user authentication device 610 in the fifth embodiment differs from the user authentication device 210 in the first embodiment in that the user authentication device 610 does not include the signature generator 210f. As shown in Fig. 31, the relay server device 630 in the fifth embodiment differs from the relay server device 230 in the first embodiment in that the relay server device 630 further includes a signature generator 630r. As shown in Fig. 32, the target server device 640 in the fifth embodiment differs from the target server device 240 in the first embodiment in that the target server device 640 further includes a public key certificate verifier.

### [Processing]

Processing in the fifth embodiment will be described next.

### [Preprocessing]

The certificate issuing server device 650 issues a public key certificate (CER) including a first public key (PK-1) and encrypted text obtained by encrypting information including the first public key (PK-1), using a second secret key of the certificate issuing server device 650. The issued public key certificate (CER) is stored in the memory 210j of the user authentication device 610. The second public key (PK-2) corresponding to the second secret key is stored in the memory 230g of the relay server device 630 and the memory 240i of the target server device 640.

User authentication device address information (AUTADR), relay server device address information (ISADR), and a relay server device standby port number (ISPN-0) are stored in the memory 210j of the user authentication device 610. Relay server device address information (ISADR), a first secret key (SK-1) of the user authentication device 610 corresponding to the first public key (PK-1), and a second public key (PK-2) corresponding to the second secret key are stored in the memory 230g of the relay server device 630. Target server device address information (TSADR) and the second public key (PK-2) corresponding to the second secret key are stored in the memory 240i of the target server device 640.
Preprocessing of the user device 220 is the same as that in the first embodiment.

### [Communication Processing]

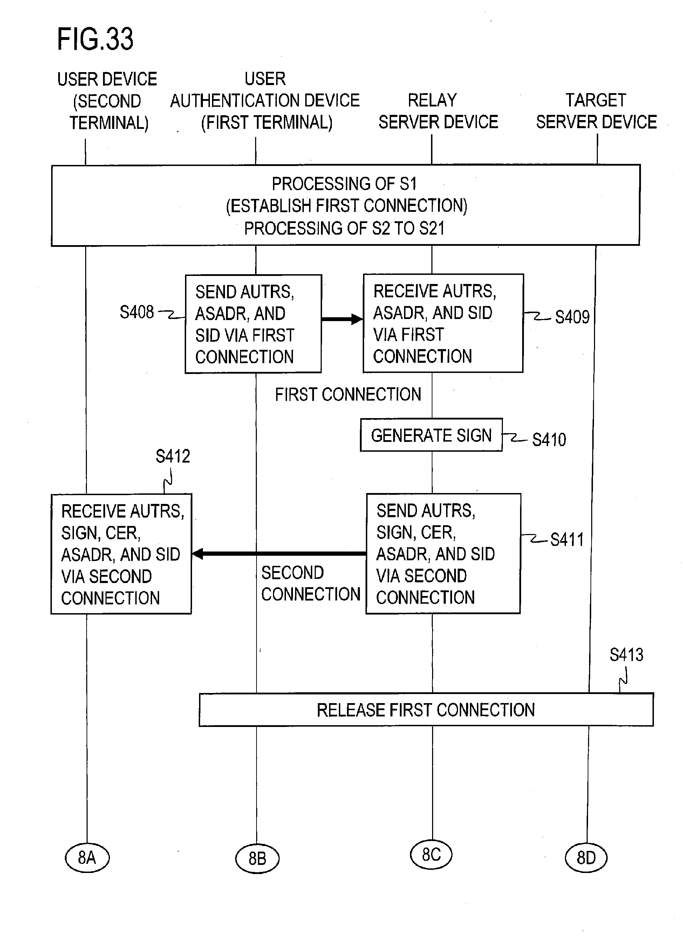

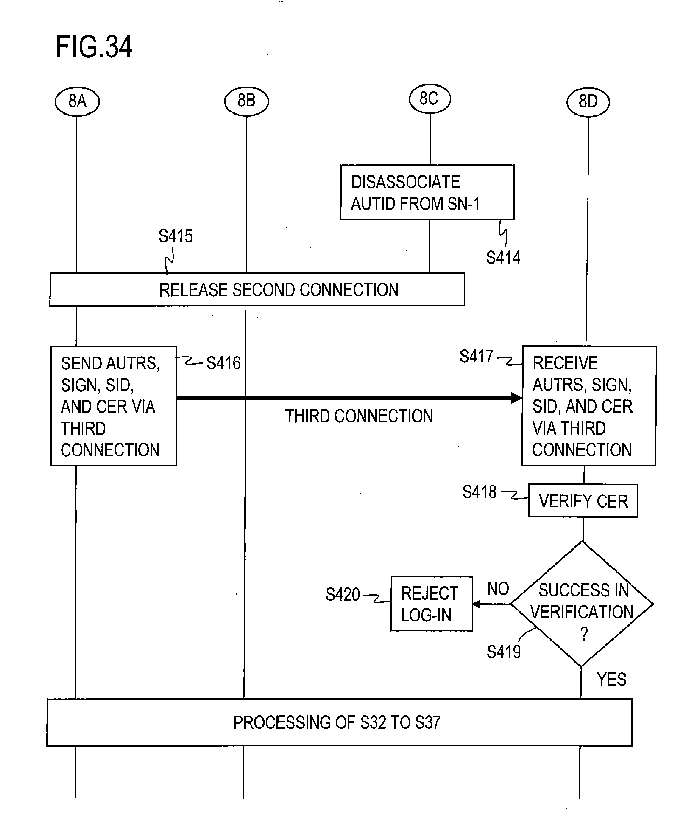

Figs. 33 and 34 are sequence diagrams illustrating communication processing in the fifth embodiment. With reference to these diagrams, the communication processing in the fifth embodiment will now be described.
As in step S1 in the first embodiment, the relay server device 630 and the user authentication device 610 establish a first connection, and processing identical to steps S2 to S21 is executed.

The communication processor 210e of the user authentication device 610 reads the authentication result information (AUTRS), the target server device address information (TSADR), and the session information (SID) (corresponding to the reply information) from the memory 210j and sends the read information to the first socket 210d. The first socket 210d sends the information to the transmitter 210a, and the transmitter 210a sends the reply information via the first connection (step S408). The sent reply information is received via the first connection by the receiver 230b of the relay server device 630 (Fig. 31) (step S409). The received authentication result information (AUTRS), the target server device address information (TSADR), and the session information (SID) are sent through the first socket 230j to the communication processor 230h, and the communication processor 230h stores these pieces of information in the memory 230g.

The signature generator 630r reads the first secret key (SK-1) and the authentication result information (AUTRS) from the memory 230g, generates signature information (SIGN) (signature information of the authentication result information (AUTRS)) by encrypting information including the authentication result information (AUTRS), using the first secret key (SK-1) with the public key encryption system, and stores the signature information (SIGN) in the memory 230g (step S410).

The communication processor 230h of the relay server device 630 reads the authentication result information (AUTRS), the signature information (SIGN), the public key certificate (CER), the target server device address information (TSADR), and the session information (SID) from the memory 230g and sends the read information to the second socket 230k. The second socket 230k sends the authentication result information (AUTRS), the signature information (SIGN), the public key certificate (CER), the target server device address information (TSADR), and the session information (SID) (corresponding to the transmission information) to the transmitter 230a. The transmitter 230a sends the transmission information as response information to the information sent in step S 14, via the second connection (step S411). The transmission information is received via the second connection by the receiver 220b of the user device 620 (Fig. 5) (step S412).

The user authentication device 610 and the relay server device 630 release the first connection (step S413), and the communication processor 230h of the relay server device 630 disassociates the user authentication device identifier (AUTID) from the first socket number (SN-1), stored in the memory 230g (step S414). The user device 620 and the relay server device 630 release the second connection (step S415).

The communication processor 220g of the user device 220 (Fig. 5) sends the authentication result information (AUTRS), the signature information (SIGN), the public key certificate (CER), and the session information (SID) to the third socket 220f of the third connection corresponding to the target server device address information (TSADR). The third socket 220f sends these pieces of information to the transmitter 220a, and the transmitter 220a sends these pieces of information via the third connection to the target server device 640 (step S416). The sent information is received via the third connection by the receiver 240b of the target server device 640 (Fig. 7) (step S417). The received information is sent through the third socket 240e to the communication processor 240f, and the communication processor 240f stores the authentication result information (AUTRS), the signature information (SIGN), the public key certificate (CER), and the session information (SID) in the memory 240i.

The public key certificate verifier 640m reads the public key certificate (CER) and the second public key (PK-2) from the memory 240i, verifies the public key certificate (CER) by using the second public key (PK-2), judges whether the public key certificate (CER) is valid, and outputs the result of judgment (step S418). The result of judgment is sent to the permission unit 240h. If the result of judgment indicates that the public key certificate (CER) is invalid, the permission unit 240h rejects the log-in of the user device 220 (step S420).
If the result of judgment indicates that the public key certificate (CER) is valid, processing identical to steps S32 to S37 in the first embodiment is executed.

### [Features of Fifth Embodiment]

The public key encryption system, which requires a large amount of computation, is usually used for the signature information (SIGN). Accordingly, if the user authentication device 610 is a device with a low computational performance (a mobile communication terminal such as a cellular phone terminal), the generation of the signature information (SIGN) in the user authentication device 610 is not desirable, in terms of performance efficiency. In the fifth embodiment, however, the user authentication device 610 does not generate the signature information (SIGN); the signature generator 630r of the relay server device 630 generates the signature information (SIGN) of the authentication result information (AUTRS) by using the first secret key (SK-1) of the user authentication device 610 (corresponding to the first terminal) (step S410). As a result, if the relay server device 630 has higher computational performance than the user authentication device 610, the processing speed of the entire system can be improved.

### [Sixth Embodiment]

A sixth embodiment is a modification of the first to fourth embodiments. The sixth embodiment differs from the first to fourth embodiments in the following point: When the user authentication device (corresponding to the first terminal) accesses the relay server device, the user authentication device generates signature information (SIGN) of the authentication result information (AUTRS) by using its first secret key (SK-1) and sends the signature information to the relay server device, and the relay server device authenticates the user authentication device by verifying the signature information (SIGN). In this modification, the signature information (SIGN) used in user authentication by the target server device is used also in the authentication of the user authentication device by the relay server device. The modification can be made to any of the first to fourth embodiments described earlier. For simplification of description, an example where this modification is made to the first embodiment will now be described. Its differences from the first embodiment will be described mainly, and a description of items common to the first embodiment will be omitted.

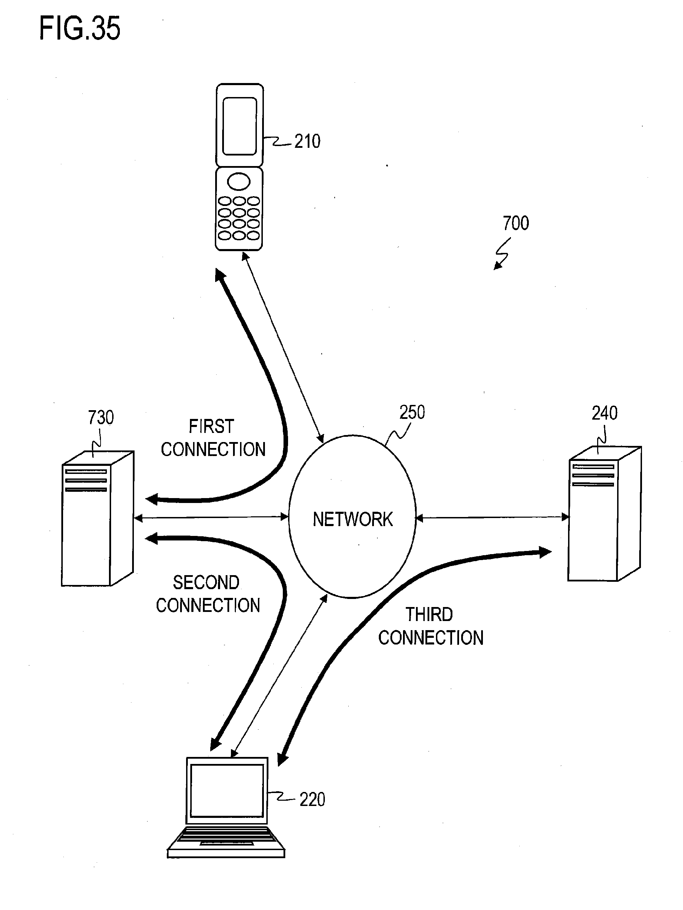

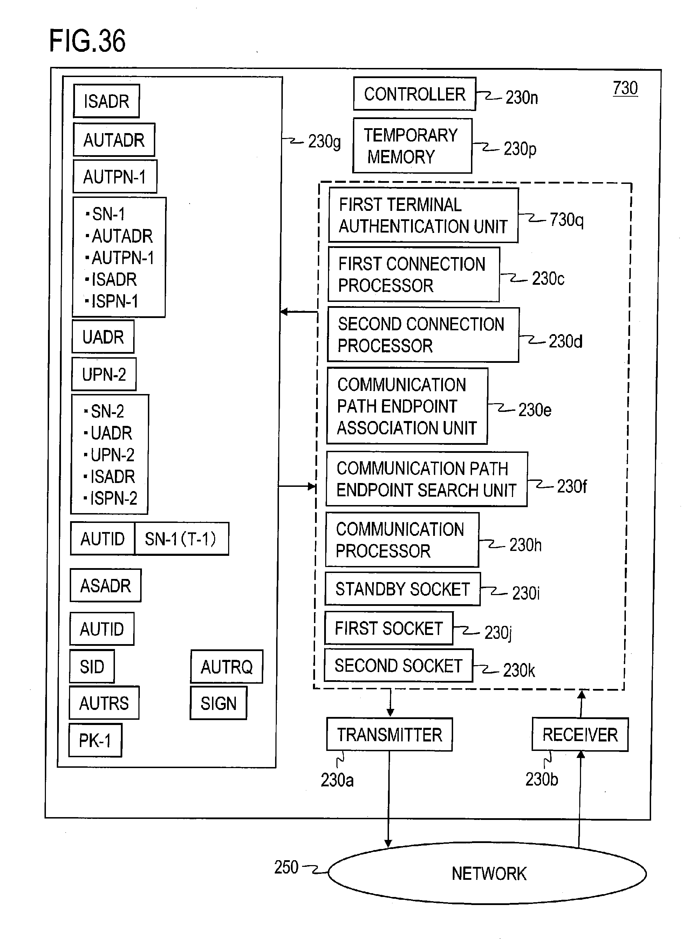

Fig. 35 is a conceptual diagram showing the entire structure of a communication system 700 in the sixth embodiment. Fig. 36 is a block diagram showing a detailed structure of a relay server device 730 in the sixth embodiment. In Figs. 35 and 36, elements identical to those in the first embodiment are indicated by the same reference numerals as used in the first embodiment.

As shown in Fig. 35, the communication system 700 in the sixth embodiment differs from the communication system 200 in the first embodiment in that the relay server device 730 replaces the relay server device 230. As shown in Fig. 36, the relay server device 730 in the sixth embodiment differs from the relay server device 230 in the first embodiment in that the relay server device 730 further includes a first terminal authentication unit 730q.

### [Processing]

Processing in the sixth embodiment will be described next.

### [Preprocessing]

Preprocessing in the sixth embodiment is the same as that in the first embodiment except that the first public key (PK-1) corresponding to the first secret key (SK-1) of the user authentication device 210 has been stored in the memory 230g of the relay server device 230.

### [Communication Processing]

Processing identical to steps S1 to S24 is executed. This causes reply information including signature information (SIGN) obtained by encrypting information including the authentication result information (AUTRS), using the first secret key with the public key encryption system, to be sent from the user authentication device 210 to the relay server device 730 via the first connection. The signature information (SIGN) is sent to the first terminal authentication unit 730q, and the first terminal authentication unit 730q verifies the signature information (SIGN) by using the first public key (PK-1) read from the memory 230g (step S501). If the result of verification of the signature information (SIGN) is rejection (step S502), the processing ends with failure of terminal authentication of the user authentication device 210 (step S503). If the result of verification of the signature information (SIGN) is acceptance (step S502), the terminal authentication of the user authentication device 210 succeeds (step S504), and processing identical to steps S25 to S37 is executed.

### [Features of Sixth Embodiment]

The signature information (SIGN) used in user authentication (steps S32 to S35) in the target server device is used also in the authentication of the user authentication device by the relay server device (steps S501 to S504). This can improve the degree of system security without increasing the amount of computation in the user authentication device.

### [Modifications etc.]

The present invention is not confined to the embodiments described above. For example, the user authentication device identifier (AUTID) may be generated randomly each time a series of processing is executed in each of the embodiments. This improves the degree of security. The processing described above may be performed in any protocol other than HTTP and HTTPS, such as the simple object access protocol (SOAP).

The processing described above may be executed in the order in which it is described and may be executed in parallel or separately in accordance with the processing capability of the device that executes the processing or as necessary. Naturally, any modification can be made within the scope of the present invention.
If the structure described above is implemented by a computer, the processing of the function to be provided by each device is described in a program. By executing the program on the computer, the corresponding processing function is implemented on the computer.

The program describing the processing can be recorded on a computer-readable recording medium. The computer-readable recording medium can be any type of magnetic recording device, optical disc, magneto-optical recording medium, or semiconductor memory, for example. More specifically, a hard disk drive, a flexible disk, a magnetic tape or the like can be used as the magnetic recording device; a DVD (digital versatile disc), DVD-RAM (random access memory), CD-ROM (compact disc read only memory), CD-R/RW (recordable/rewritable), or the like can be used as the optical disc; an MO (magneto-optical disc) or the like can be used as a magneto-optical recording medium; and an EEP-ROM (electronically erasable and programmable read only memory) or the like can be used as the semiconductor memory, for example.

The program is distributed by selling, transferring, or lending a portable recording medium, such as a DVD or a CD-ROM, with the program recorded on it, for example. The program may also be distributed by storing the program in a storage device of a server computer and transferring the program from the server computer through a network to another computer.

The computer which executes this type of program first temporarily stores the program recorded on the portable recording medium or the program transferred from the server computer in its own storage device. When executing the processing, the computer reads the program stored in its recording medium and executes the processing in accordance with the read program. In another style of program execution, the computer may read the program directly from the portable recording medium and may execute the processing in accordance with the program. Further, the computer may also execute the processing in accordance with the received program each time the program is transferred from the server computer. The processing may also be executed by a so-called application service provider (ASP) service, in which a server computer does not transfer the program to a local computer, and the processing of the function is implemented just by giving execution instructions and receiving results. The program in the embodiments described above includes information used in the processing by the computer and close to a program (not a direct instruction to the computer but data having a characteristic of specifying the processing of the computer).

Although the device is implemented by executing the predetermined program on the computer in the embodiments described above, at least a part of the processing can be implemented by hardware.

### INDUSTRIAL APPLICABILITY

The field of application of the present invention is a single sign-on system using a cellular phone terminal as a user authentication device, for example.

## Claims

1. A communication method between a first terminal and a second terminal, the first terminal having a connection establishment request function to send connection establishment request information to a device without an established connection but not having a connection standby function to receive, in a standby state, connection establishment request information from a device and to establish a connection with the device, and the second terminal having the connection establishment request function, the communication method comprising the steps of:
(a) establishing a first connection between a relay server device and the first terminal when the relay server device being triggered by first connection establishment request information transmitted from a transmitter of the first terminal, the relay server device having the connection standby function;
(b) storing an identifier and first endpoint information corresponding to the first connection in association with each other in a memory, by a communication path endpoint association unit of the relay server device;
(c) establishing a second connection between the relay server device and the second terminal when the relay server being triggered by second connection establishment request information transmitted from a transmitter of the second terminal;
(d) transmitting second request information having transmission information and the identifier from the transmitter of the second terminal via the second connection;
(e) receiving the second request information in a receiver of the relay server device via the second connection;
(f) searching through the memory for a match with the identifier included in the second request information and to extract the first endpoint information associated with the identifier, by a communication path endpoint search unit of the relay server device;
(g) transmitting the transmission information included in the second request information , from a transmitter of the relay server device via the first connection corresponding to the first endpoint information extracted in the step (f), as response information to first request information; and
(h) receiving the transmission information in a receiver of the first terminal via the first connection.

2. The communication method according to Claim 1, wherein the identifier is an identifier of the first terminal,
the communication method further comprising the steps of:
(i) transmitting the first request information having the identifier of the first terminal, from the transmitter of the first terminal via the first connection; and
(j) receiving the first request information in the receiver of the relay server device via the first connection;
the steps (i) and (j) being executed between the steps (a) and (b); and the identifier included in the second request information being identified by information input to an input unit, which is a user interface, of the second terminal.

3. The communication method according to Claim 1, wherein the identifier is a temporary identifier formed of a random character string generated temporarily.

4. The communication method according to Claim 3, the communication method further comprising the steps of:
(k-1) generating the temporary identifier in a temporary identifier generator of the relay server device;
(k-2) transmitting the temporary identifier from the transmitter of the relay server device to the first terminal;
(k-3) outputting the temporary identifier from an output unit, which is a user interface, of the first terminal; and
(k-4) accepting input of the temporary identifier in an input unit, which is a user interface, of the second terminal;
the step (k-1) being executed before the step (b);
the step (b) comprising a step of storing the temporary identifier generated in the step (k-1) and the first endpoint information in association with each other in the memory; and
the identifier included in the second request information being the temporary identifier input to the input unit in the step (k-4).

5. The communication method according to one of Claims 1 to 4, wherein the transmission information included in the second request information includes session information,
the communication method further comprising the steps of:
(l) storing the session information included in the second request information and second endpoint information corresponding to the second connection in association with each other in the memory, by the communication path endpoint association unit of the relay server device;
(m) transmitting reply information including the session information from the transmitter of the first terminal to the relay server device via the first connection;
(n) receiving the reply information in the receiver of the relay server device via the first connection;
(o) searching through the memory for a match with the session information included in the reply information and to extract the second endpoint information associated with the session information, by the communication path endpoint search unit of the relay server device;
(p) transmitting the reply information as response information to the second request information, from the transmitter of the relay serer device via the second connection corresponding to the second endpoint information extracted in the step (o); and
(q) receiving the reply information in a receiver of the second terminal via the second connection;
the step (l) being executed between the steps (e) and (g);
the step (m) being executed between the steps (h) and (n); and
the step (o) being executed between the steps (n) and (p).

6. The communication method according to one of Claims 1 to 4, wherein the first terminal is a user authentication device which performs user authentication;
the second terminal is a user device provided in a housing differing from that of the first terminal; and
the transmission information includes authentication request information to the first terminal;
the communication method further comprising the steps of:
(r) accepting input of authentication information in an input unit, which is a user interface, of the first terminal;
(s) performing authentication processing of the user of the second terminal in an authentication processor of the first terminal by using the authentication information to generate authentication result information indicating result of the authentication processing;
(m) transmitting the authentication result information from the transmitter of the first terminal to the relay server device via the first connection;
(n) receiving the authentication result information in the receiver of the relay server device via the first connection;
(p) transmitting the authentication result information as response information to the second request information, from the transmitter of the relay server device via the second connection;
(q) receiving the authentication result information in a receiver of the second terminal via the second connection;
(t) transmitting the authentication result information from the transmitter of the second terminal to a target server device;
(u) receiving the authentication result information in a receiver of the target server device; and
(v) permitting communication of service information between the target server device and the second terminal, in a permission unit of the target server device which has received the reply information;
the steps (r), (s), (m), (n), (p), (q), (t), (u), and (v) being executed after the step (h).

7. The communication method according to Claim 6, further comprising the steps of:
(w) generating signature information of the authentication result information by using a first secret key of the first terminal and outputting the signature information, in a signature generator of the relay server device; and
(x) verifying the signature information of the authentication result information by using a first public key corresponding to the first secret key, judging whether the authentication result information is valid, and outputting the judgment result, in an authentication result verifier of the target server device;
the step (w) being executed between the steps (n) and (p);
the step (p) being a step in which the transmitter of the relay server device transmits the signature information in addition to the authentication result information to the second terminal;
the step (q) being a step in which the receiver of the second terminal receives the signature information in addition to the authentication result information;
the step (t) being a step in which the transmitter of the second terminal transmits the signature information in addition to the authentication result information, to the target server device;
the step (u) being a step in which the receiver of the target server device receives the signature information in addition to the authentication result information;
the step (x) being executed between the steps (u) and (v); and
the step (v) being a step in which, when the authentication result information is judged as being valid in the step (x), the permission unit of the target server device permits communication of service information between the target server device and the second terminal.

8. The communication method according to Claim 1, wherein the second terminal is a device having the connection establishment request function but not having the connection standby function.

9. A relay server device comprising:
a memory;
a first connection processor configured to establish a first connection with a first terminal when triggered by first connection establishment request information transmitted from the first terminal;
a communication path endpoint association unit configured to store an identifier and first endpoint information corresponding to the first connection in association with each other in the memory;
a second connection processor configured to establish a second connection with a second terminal when triggered by second connection establishment request information transmitted from the second terminal;
a receiver configured to receive second request information including transmission information and the identifier, via the second connection;
a communication path endpoint search unit configured to search through the memory for a match with the identifier included in the second request information and to extract the first endpoint information associated with the identifier; and
a transmitter configured to transmit the transmission information included in the second request information, via the first connection corresponding to the first endpoint information extracted by the communication path endpoint search unit, as response information to first request information.

10. The relay server device according to Claim 9, wherein the identifier is a temporary identifier formed of a random character string generated temporarily.

11. The relay server device according to Claim 9, wherein the transmission information included in the second request information includes session information;
the communication path endpoint association unit is further configured to store the session information included in the second request information and second endpoint information corresponding to the second connection, in association with each other in the memory;
the receiver is further configured to receive reply information including the session information, via the first connection;
the communication path endpoint search unit is further configured to search through the memory for a match with the session information included in the reply information and to extract the second endpoint information associated with the session information; and
the transmitter is further configured to transmit the reply information as response information to the second request information, via the second connection corresponding to the extracted second endpoint information.

12. A program for operating a computer as the relay server device according to Claim 9.

13. A computer-readable recording medium having stored the program according to Claim 12.
